# EUROPEAN PATENT APPLICATION

(11) **EP 4 546 168 A1**
(43) Date of publication of application: **30.04.2025**
(21) Application number: 23849492.6
(22) Date of filing: 03.08.2023
(51) Int. Cl.: G06F 16/9535

(54) **INTENT MANAGEMENT METHOD AND APPARATUS**

(30) Priority: 04.08.2022 CN 202210932941
(71) Applicant: Huawei Technologies Co., Ltd., Shenzhen, Guangdong 518129 (CN)
(72) Inventor: XU, Ruiyue, Shenzhen, Guangdong 518129 (CN)
(74) Representative: Maiwald GmbH
(86) International application number: PCT/CN2023/110921
(87) International publication number: WO 2024/027788

(57) **Abstract**

Embodiments of this application disclose an intent management method and a related apparatus. The method includes: A first apparatus receives intent management capability information from a second apparatus, where the intent management capability information indicates intent management capability information supported by the second apparatus. Then, the first apparatus generates target intent information based on first information and a service requirement. Finally, the first apparatus sends the target intent information to the second apparatus. The target intent information is generated based on the service requirement and the intent management capability information supported by the second apparatus, and the target intent information meets a management requirement. Therefore, a degree of matching between the target intent information and the second apparatus can be effectively improved. This avoids a problem that the target intent information does not match the second apparatus, avoids repeated adjustment of the delivered intent information, and improves efficiency.

## Description

This application claims priority to Chinese Patent Application No. 202210932941.3, filed with the China National Intellectual Property Administration on August 4, 2022 and entitled "INTENT MANAGEMENT METHOD AND APPARATUS", which is incorporated herein by reference in its entirety.

### TECHNICAL FIELD

This application relates to the field of computer technologies, and in particular, to an intent management method and an apparatus.

### BACKGROUND

With rapid development of communication technologies, including introduction of vertical industries, an increase of terminal devices, and diversity of services, a network of an operator becomes increasingly complex. The complex network increases difficulty of operations and maintenance. The operator focuses on how to rapidly deploy a network through simple, efficient, and low-cost network operations and maintenance, to meet diversified services.

In a network management system or a network device management system, a network device is managed by using network instructions to implement network operation. For example, the network device is managed by using man machine language (man machine language, MML) instructions. Complexity and fast update and iteration of the network device lead to complex network instructions. The operator needs to invest a large amount of manpower to learn operation instructions of different devices or management systems of different device vendors. Consequently, managing the network device by using the network instructions is complex and costly, and cross-vendor integration is difficult to implement. Based on this, a management interface of an intent is introduced into the network management system. A user of a network expresses an intent to a management device through the management interface of the intent, and the management device converts the intent into a specific network instruction to manage the network device. This improves management efficiency, reduces implementation complexity, and reduces operations and maintenance costs.

However, the intent does not well match an actual network environment, and the intent usually needs to be repeatedly delivered for a plurality of times. Only in this way, the intent can match the actual network environment and a service requirement can be met. The foregoing process is time-consuming and inefficient. Therefore, a new intent management method is needed to improve efficiency.

### SUMMARY

According to a first aspect, an embodiment of this application provides an intent management method. The intent management method includes:
A first apparatus receives intent management capability information from a second apparatus, where the intent management capability information indicates intent management capability information supported by the second apparatus; the first apparatus generates target intent information based on the intent management capability information and a management requirement, where the target intent information meets a constraint of the intent management capability information, and the target intent information meets the management requirement; and the first apparatus sends the target intent information to the second apparatus.

Specifically, the management requirement may be delivered by an operator, or the management requirement may be delivered by a third-party system (for example, a company system). This is not limited in embodiments of this application. The management requirement includes a service requirement or another requirement. This is not limited in embodiments of this application.

For example, the management requirement is as follows: For a radio network covered by both a 4th generation (4th generation, 4G) mobile communication technology network and a 5th generation (5th generation, 5G) mobile communication technology network, there is a requirement for collaboration between an experience target and an energy saving target.

Embodiments of this application provide an intent management method. A first apparatus receives intent management capability information from a second apparatus, where the intent management capability information indicates intent management capability information supported by the second apparatus. Then, the first apparatus generates target intent information based on first information and a service requirement. Finally, the first apparatus sends the target intent information to the second apparatus. The target intent information is generated based on the service requirement and the intent management capability information supported by the second apparatus, and the target intent information meets a management requirement. Therefore, a degree of matching between the target intent information and the second apparatus can be effectively improved. This avoids a problem that the target intent information does not match the second apparatus, avoids repeated adjustment of the delivered intent information, and improves efficiency.

In a possible implementation of the first aspect, the intent management capability information further includes a first identifier and a second identifier, where the first identifier is an identifier of the intent management capability information, the second identifier is an identifier of an intent management function object to which the intent management capability information belongs, and the second apparatus manages one or more intent management function objects, and each intent management function object includes one or more pieces of intent management capability information.

In embodiments of this application, the intent management capability information may further include the first identifier and the second identifier. The first identifier is the identifier of the intent management capability information, and the second identifier is the identifier of the intent management function object to which the intent management capability information belongs. After obtaining the intent management capability information, the first apparatus may manage the intent management capability information based on the first identifier and the second identifier, to improve processing efficiency of subsequently generating target intent information.

In a possible implementation of the first aspect, that the first apparatus sends the target intent information to the second apparatus includes: The first apparatus sends the target intent information and the second identifier to the second apparatus.

In embodiments of this application, when delivering the target intent information, the first apparatus may further deliver a second identifier corresponding to an intent indicated by the target intent information. In this way, the second apparatus determines a matched intent management function object based on the second identifier, and then creates the intent in the intent management function object based on the target intent information. This improves a degree of matching between the intent and the second apparatus, ensures that the second apparatus selects an appropriate intent management function object to create and execute the intent, and improves execution efficiency of the intent.

In a possible implementation of the first aspect, that the first apparatus generates target intent information based on the intent management capability information and a management requirement includes: The first apparatus determines target intent management capability information from at least one piece of intent management capability information based on the management requirement, where the target intent management capability information meets the management requirement, the at least one piece of intent management capability information is from at least one second apparatus, and each second apparatus supports intent management capability information indicated by one or more pieces of intent management capability information; and the first apparatus generates the target intent information based on the management requirement and the target intent management capability information.

In embodiments of this application, the first apparatus determines the target intent management capability information based on the management requirement and the at least one piece of intent management capability information in the first apparatus, where the target intent management capability information meets the management requirement. Then, the target intent information is generated based on the target intent management capability information and the management requirement, so that a degree of matching between the target intent information and the second apparatus corresponding to the target intent management capability information can be effectively improved, and repeated adjustment of the intent is avoided.

In a possible implementation of the first aspect, the method further includes:
The first apparatus obtains update information, where the update information indicates that the intent management capability information supported by the second apparatus changes; and
the first apparatus updates the intent management capability information based on the update information.

In embodiments of this application, the first apparatus (for example, an operator) may learn of, in a timely manner, the intent management capability information of the second apparatus (for example, an autonomous network) managed by the first apparatus, to avoid generating the target intent information based on outdated intent management capability information, and improve a degree of matching between the second apparatus and the intent.

In a possible implementation of the first aspect, the method further includes:
The first apparatus generates updated target intent information based on the management requirement and updated intent capability information; and
the first apparatus sends the updated target intent information to the second apparatus.

In embodiments of this application, after receiving update information from the second apparatus, the first apparatus learns that the intent management capability information of the second apparatus changes, and the first apparatus may update, in a timely manner, an intent (delivered by using the updated target intent information) corresponding to the intent management capability information, to improve a degree of matching between the delivered intent and the second apparatus.

In a possible implementation of the first aspect, updated intent management capability information indicates one or more of the following:
The second apparatus adds the supported intent management capability information, or
the second apparatus deletes the supported intent management capability information, or
the second apparatus modifies the supported intent management capability information.

In a possible implementation of the first aspect, that the first apparatus updates the intent management capability information based on the update information includes:
The update information further includes the first identifier and the second identifier;
the first apparatus determines the changed intent management function object from the one or more intent management function objects of the second apparatus based on the second identifier;
the first apparatus determines the changed intent management capability information from the changed intent management function object based on the first identifier; and
the first apparatus updates the intent management capability information based on the update information.

In embodiments of this application, the update information may also include the first identifier and the second identifier, so that the first apparatus can quickly search for the intent management function object in the first apparatus based on the first identifier and the second identifier, and update the intent management capability information in the intent management function object.

According to a second aspect, an embodiment of this application provides an intent management method. The intent management method includes:
A second apparatus sends intent management capability information to a first apparatus, where the intent management capability information indicates intent management capability information supported by the second apparatus;
the second apparatus receives target intent information from the first apparatus, where the target intent information meets a constraint of the intent management capability information, and the target intent information meets a management requirement; and
the second apparatus processes the target intent information.

Embodiments of this application provide an intent management method. A second apparatus sends intent management capability information to a first apparatus, where the intent management capability information indicates intent management capability information supported by the second apparatus. Then, the second apparatus receives target intent information from the first apparatus, where the target intent information meets a constraint of the intent management capability information, and the target intent information meets a management requirement. Finally, the second apparatus processes the target intent information. The specific processed intent information includes: translating the intent information, creating an intent, implementing the intent, and determining an evaluation result of the implemented intent. Then, the second apparatus feeds back the evaluation result of the implemented intent to the first apparatus.

The target intent information is generated based on the service requirement and the intent management capability information supported by the second apparatus, and the target intent information meets a management requirement. Therefore, a degree of matching between the target intent information and the second apparatus can be effectively improved. This avoids a problem that the target intent information does not match the second apparatus, avoids repeated adjustment of the delivered intent information, and improves efficiency.

In a possible implementation of the second aspect, the intent management capability information further includes a first identifier and a second identifier, where the first identifier is an identifier of the intent management capability information, and the second identifier is an identifier of an intent management function object to which the intent management capability information belongs; and
the second apparatus manages one or more intent management function objects, and each intent management function object includes one or more pieces of intent management capability information.

In embodiments of this application, the intent management capability information may further include the first identifier and the second identifier. The first identifier is the identifier of the intent management capability information, and the second identifier is the identifier of the intent management function object to which the intent management capability information belongs. After obtaining the intent management capability information, the first apparatus may manage the intent management capability information based on the first identifier and the second identifier, to improve processing efficiency of subsequently generating a target intent.

In a possible implementation of the second aspect, that the second apparatus receives the target intent information from the first apparatus includes:
The second apparatus receives the target intent information and the second identifier from the first apparatus; and
that the second apparatus processes the target intent information includes:
   The second apparatus determines, based on the second identifier from the one or more intent management function objects, an intent management function object that executes the target intent information; and
   the second apparatus creates an intent based on the target intent information in the determined intent management function object that executes the target intent information.

In embodiments of this application, when delivering the target intent information, the first apparatus may further deliver a second identifier corresponding to an intent indicated by the target intent information. In this way, the second apparatus determines a matched intent management function object based on the second identifier, and then creates the intent in the intent management function object based on the target intent information. This improves a degree of matching between the intent and the second apparatus, ensures that the second apparatus selects an appropriate intent management function object to create and execute the intent, and improves execution efficiency of the intent.

In a possible implementation of the second aspect, the method further includes:
The second apparatus sends update information to the first apparatus, where the update information indicates that the intent management capability information supported by the second apparatus changes.

In embodiments of this application, the second apparatus (for example, an autonomous network) may report a change status of the intent management capability information, so that the first apparatus (for example, an operator) learns of the intent management capability information of the second apparatus in a timely manner, to avoid generating the target intent information based on outdated intent management capability information, and improve a degree of matching between the second apparatus and the intent.

In a possible implementation of the second aspect, the method further includes: The second apparatus receives updated target intent information from the first apparatus.

In embodiments of this application, after receiving update information from the second apparatus, the first apparatus learns that the intent management capability information of the second apparatus changes, and the first apparatus may update, in a timely manner, an intent (delivered by using the updated target intent information) corresponding to the intent management capability information. Correspondingly, the second apparatus may obtain the updated target intent information in a timely manner. A degree of matching between the delivered intent and the second apparatus is improved.

In a possible implementation of the second aspect, the updated intent management capability information indicates one or more of the following:
The second apparatus adds the supported intent management capability information, or
the second apparatus deletes the supported intent management capability information, or
the second apparatus modifies the supported intent management capability information.

With reference to the first aspect or the second aspect, in a possible implementation of the first aspect or the second aspect, the intent management capability information includes one or both of the following: the intent management capability information includes information about an intent object supported by the second apparatus, or the intent management capability information includes information about an intent target supported by the second apparatus.

With reference to the first aspect or the second aspect, in a possible implementation of the first aspect or the second aspect, the information about the intent object includes one or more of the following: type information of the intent object, granularity information of the intent object, network standard information of the intent object, or frequency domain information of the intent object; and the information about the intent target includes one or more of the following: type information of the intent target, name information of the intent target, or a value range of the intent target.

With reference to the first aspect or the second aspect, in a possible implementation of the first aspect or the second aspect, the intent management capability information further includes: whether the intent object supports a plurality of frequency domains, or whether the intent object supports a plurality of network standards; and whether the second apparatus supports a plurality of intent targets or a constraint relationship between a plurality of intent targets supported by the second apparatus.

With reference to the first aspect or the second aspect, in a possible implementation of the first aspect or the second aspect, the type information of the intent object includes one or more of the following: a radio network, a radio service, a core network, a core network service, a network slice, or a communication service; the granularity information of the intent object includes one or more of the following: a public land mobile network PLMN granularity, a 5G quality of service indicator 5QI granularity, a single network slice selection assistance information S-NSSAI granularity, a user equipment UE granularity, a UE group granularity, a tenant granularity, a region granularity, or a raster granularity; the network standard information of the intent object includes: a 3G network, a 4G network, or a 5G network; and the frequency domain information of the intent object includes: frequency information or frequency band information.

With reference to the first aspect or the second aspect, in a possible implementation of the first aspect or the second aspect, the type information of the intent target includes one or more of the following: a coverage-type target, a capacity-type target, a rate-type target, an energy efficiency-type target, a voice-type target, a latency-type target, or an experience-type target; and the name information of the intent target includes one or more of the following: a weak reference signal received power RSRP ratio target, a low signal to interference plus noise ratio SINR ratio target, a low rate ratio target, a latency target, a high physical resource block PRB load ratio target, an energy consumption target, an energy efficiency target, or a call drop rate target.

According to a third aspect, an embodiment of this application provides an intent management method. The method is applied to a communication system, the communication system includes: a first apparatus and a second apparatus, and the method includes:
The second apparatus sends intent management capability information to the first apparatus, where the intent management capability information indicates intent management capability information supported by the second apparatus;
the first apparatus generates target intent information based on the intent management capability information and a management requirement, where the target intent information meets a constraint of the intent management capability information, and the target intent information meets the management requirement;
the first apparatus sends the target intent information to the second apparatus; and
the second apparatus processes the target intent information.

Embodiments of this application provide an intent management method. A second apparatus sends intent management capability information to a first apparatus, where the intent management capability information indicates intent management capability information supported by the second apparatus. Then, the first apparatus generates target intent information based on first information and a service requirement. Then, the first apparatus sends the target intent information to the second apparatus. The second apparatus processes the target intent information. The target intent information is generated based on the service requirement and the intent management capability information supported by the second apparatus, and the target intent information meets a management requirement. Therefore, a degree of matching between the target intent information and the second apparatus can be effectively improved. This avoids a problem that the target intent information does not match the second apparatus, avoids repeated adjustment of the delivered intent information, and improves efficiency.

In a possible implementation of the third aspect, the intent management capability information includes one or both of the following: the intent management capability information includes information about an intent object supported by the second apparatus, or the intent management capability information includes information about an intent target supported by the second apparatus.

In a possible implementation of the third aspect, the information about the intent object includes one or more of the following: type information of the intent object, granularity information of the intent object, network standard information of the intent object, or frequency domain information of the intent object; and the information about the intent target includes one or more of the following: type information of the intent target, name information of the intent target, or a value range of the intent target.

In a possible implementation of the third aspect, the intent management capability information further includes: whether the intent object supports a plurality of frequency domains, or whether the intent object supports a plurality of network standards; and whether the second apparatus supports a plurality of intent targets or a constraint relationship between a plurality of intent targets supported by the second apparatus.

In a possible implementation of the third aspect, the type information of the intent object includes one or more of the following: a radio network, a radio service, a core network, a core network service, a network slice, or a communication service; the granularity information of the intent object includes one or more of the following: a public land mobile network PLMN granularity, a 5G quality of service indicator 5QI granularity, a single network slice selection assistance information S-NSSAI granularity, a user equipment UE granularity, a UE group granularity, a tenant granularity, a region granularity, or a raster granularity; the network standard information of the intent object includes: a 3G network, a 4G network, or a 5G network; and the frequency domain information of the intent object includes: frequency information or frequency band information.

In a possible implementation of the third aspect, the type information of the intent target includes one or more of the following: a coverage-type target, a capacity-type target, a rate-type target, an energy efficiency-type target, a voice-type target, a latency-type target, or an experience-type target; and the name information of the intent target includes one or more of the following: a weak reference signal received power RSRP ratio target, a low signal to interference plus noise ratio SINR ratio target, a low rate ratio target, a latency target, a high physical resource block PRB load ratio target, an energy consumption target, an energy efficiency target, or a call drop rate target.

In a possible implementation of the third aspect, the intent management capability information further includes: a first identifier and a second identifier, where the first identifier is an identifier of the intent management capability information, and the second identifier is an identifier of an intent management function object to which the intent management capability information belongs; and the second apparatus manages one or more intent management function objects, and each intent management function object includes one or more pieces of intent management capability information.

In embodiments of this application, the intent management capability information may further include the first identifier and the second identifier. The first identifier is the identifier of the intent management capability information, and the second identifier is the identifier of the intent management function object to which the intent management capability information belongs. After obtaining the intent management capability information, the first apparatus may manage the intent management capability information based on the first identifier and the second identifier, to improve processing efficiency of subsequently generating a target intent.

In a possible implementation of the third aspect, that the first apparatus sends the target intent information to the second apparatus includes:
The first apparatus sends the target intent information and the second identifier to the second apparatus; and
that the second apparatus processes the target intent information includes:
   The second apparatus determines, based on the second identifier from the one or more intent management function objects, an intent management function object that executes the target intent information; and
   the second apparatus creates an intent based on the target intent information in the determined intent management function object that executes the target intent information.

In embodiments of this application, when delivering the target intent information, the first apparatus may further deliver a second identifier corresponding to an intent indicated by the target intent information. In this way, the second apparatus determines a matched intent management function object based on the second identifier, and then creates the intent in the intent management function object based on the target intent information. This improves a degree of matching between the intent and the second apparatus, ensures that the second apparatus selects an appropriate intent management function object to create and execute the intent, and improves execution efficiency of the intent.

According to a fourth aspect, an embodiment of this application provides a communication apparatus. The communication apparatus is used as a first apparatus, and the communication apparatus includes:
a transceiver module and a processing module connected to the transceiver module, where
the transceiver module is configured to receive intent management capability information from a second apparatus, where the intent management capability information indicates intent management capability information supported by the second apparatus;
the processing module is configured to generate target intent information based on the intent management capability information and a management requirement, where the target intent information meets a constraint of the intent management capability information, and the target intent information meets the management requirement; and
the transceiver module is further configured to send the target intent information to the second apparatus.

In a possible implementation, the intent management capability information includes one or both of the following:
the intent management capability information includes information about an intent object supported by the second apparatus, or
the intent management capability information includes information about an intent target supported by the second apparatus.

In a possible implementation, the information about the intent object includes one or more of the following:
type information of the intent object, granularity information of the intent object, network standard information of the intent object, or frequency domain information of the intent object; and
the information about the intent target includes one or more of the following:
   type information of the intent target, name information of the intent target, or a value range of the intent target.

In a possible implementation, the intent management capability information further includes:
whether the intent object supports a plurality of frequency domains, or whether the intent object supports a plurality of network standards; and
whether the second apparatus supports a plurality of intent targets or a constraint relationship between a plurality of intent targets supported by the second apparatus.

In a possible implementation, the type information of the intent object includes one or more of the following:
a radio network, a radio service, a core network, a core network service, a network slice, or a communication service;
the granularity information of the intent object includes one or more of the following:
   a public land mobile network PLMN granularity, a 5G quality of service indicator 5QI granularity, a single network slice selection assistance information S-NSSAI granularity, a user equipment UE granularity, a UE group granularity, a tenant granularity, a region granularity, or a raster granularity;
   the network standard information of the intent object includes: a 3G network, a 4G network, or a 5G network; and
   the frequency domain information of the intent object includes: frequency information or frequency band information.

In a possible implementation, the type information of the intent target includes one or more of the following:
a coverage-type target, a capacity-type target, a rate-type target, an energy efficiency-type target, a voice-type target, a latency-type target, or an experience-type target; and
the name information of the intent target includes one or more of the following:
   a weak reference signal received power RSRP ratio target, a low signal to interference plus noise ratio SINR ratio target, a low rate ratio target, a latency target, a high physical resource block PRB load ratio target, an energy consumption target, an energy efficiency target, or a call drop rate target.

In a possible implementation, the intent management capability information further includes a first identifier and a second identifier, where
the first identifier is an identifier of the intent management capability information, and
the second identifier is an identifier of an intent management function object to which the intent management capability information belongs.

In a possible implementation, the transceiver module is further configured to send the target intent information and the second identifier to the second apparatus.

According to a fifth aspect, an embodiment of this application provides a communication apparatus. The communication apparatus is used as a second apparatus, and the communication apparatus includes:
a transceiver module and a processing module connected to the transceiver module, where
the transceiver module is configured to send intent management capability information to a first apparatus, where the intent management capability information indicates intent management capability information supported by the second apparatus;
the transceiver module is further configured to receive target intent information from the first apparatus, where the target intent information meets a constraint of the intent management capability information, and the target intent information meets a management requirement; and
the processing module is configured to process the target intent information.

In a possible implementation, the intent management capability information includes one or both of the following:
the intent management capability information includes information about an intent object supported by the second apparatus, or
the intent management capability information includes information about an intent target supported by the second apparatus.

In a possible implementation, the information about the intent object includes one or more of the following:
type information of the intent object, granularity information of the intent object, network standard information of the intent object, or frequency domain information of the intent object; and
the information about the intent target includes one or more of the following:
   type information of the intent target, name information of the intent target, or a value range of the intent target.

In a possible implementation, the intent management capability information further includes:
whether the intent object supports a plurality of frequency domains, or whether the intent object supports a plurality of network standards; and
whether the second apparatus supports a plurality of intent targets or a constraint relationship between a plurality of intent targets supported by the second apparatus.

In a possible implementation, the type information of the intent object includes one or more of the following:
a radio network, a radio service, a core network, a core network service, a network slice, or a communication service;
the granularity information of the intent object includes one or more of the following:
   a public land mobile network PLMN granularity, a 5G quality of service indicator 5QI granularity, a single network slice selection assistance information S-NSSAI granularity, a user equipment UE granularity, a UE group granularity, a tenant granularity, a region granularity, or a raster granularity;
   the network standard information of the intent object includes: a 3G network, a 4G network, or a 5G network; and
   the frequency domain information of the intent object includes: frequency information or frequency band information.

In a possible implementation, the type information of the intent target includes one or more of the following:
a coverage-type target, a capacity-type target, a rate-type target, an energy efficiency-type target, a voice-type target, a latency-type target, or an experience-type target; and
the name information of the intent target includes one or more of the following:
   a weak reference signal received power RSRP ratio target, a low signal to interference plus noise ratio SINR ratio target, a low rate ratio target, a latency target, a high physical resource block PRB load ratio target, an energy consumption target, an energy efficiency target, or a call drop rate target.

In a possible implementation, the intent management capability information further includes a first identifier and a second identifier, where
the first identifier is an identifier of the intent management capability information, and
the second identifier is an identifier of an intent management function object to which the intent management capability information belongs; and
the second apparatus manages one or more intent management function objects, and each intent management function object includes one or more pieces of intent management capability information.

In a possible implementation, the transceiver module is further configured to receive the target intent information and the second identifier from the first apparatus;
the processing module is further configured to determine, based on the second identifier from the one or more intent management function objects, an intent management function object that executes the target intent information; and
the processing module is further configured to create an intent based on the target intent information in the determined intent management function object that executes the target intent information.

According to a sixth aspect, an embodiment of this application provides a communication apparatus. The communication apparatus is used as a first apparatus, and the communication apparatus includes:
a communication interface and a processor connected to the communication interface, where
the communication interface is configured to receive intent management capability information from a second apparatus, where the intent management capability information indicates intent management capability information supported by the second apparatus;
the processor is configured to generate target intent information based on the intent management capability information and a management requirement, where the target intent information meets a constraint of the intent management capability information, and the target intent information meets the management requirement; and
the communication interface is further configured to send the target intent information to the second apparatus.

In a possible implementation, the intent management capability information includes one or both of the following:
the intent management capability information includes information about an intent object supported by the second apparatus, or
the intent management capability information includes information about an intent target supported by the second apparatus.

In a possible implementation, the information about the intent object includes one or more of the following:
type information of the intent object, granularity information of the intent object, network standard information of the intent object, or frequency domain information of the intent object; and
the information about the intent target includes one or more of the following:
   type information of the intent target, name information of the intent target, or a value range of the intent target.

In a possible implementation, the intent management capability information further includes:
whether the intent object supports a plurality of frequency domains, or whether the intent object supports a plurality of network standards; and
whether the second apparatus supports a plurality of intent targets or a constraint relationship between a plurality of intent targets supported by the second apparatus.

In a possible implementation, the type information of the intent object includes one or more of the following:
a radio network, a radio service, a core network, a core network service, a network slice, or a communication service;
the granularity information of the intent object includes one or more of the following:
   a public land mobile network PLMN granularity, a 5G quality of service indicator 5QI granularity, a single network slice selection assistance information S-NSSAI granularity, a user equipment UE granularity, a UE group granularity, a tenant granularity, a region granularity, or a raster granularity;
   the network standard information of the intent object includes: a 3G network, a 4G network, or a 5G network; and
   the frequency domain information of the intent object includes: frequency information or frequency band information.

In a possible implementation, the type information of the intent target includes one or more of the following:
a coverage-type target, a capacity-type target, a rate-type target, an energy efficiency-type target, a voice-type target, a latency-type target, or an experience-type target; and
the name information of the intent target includes one or more of the following:
   a weak reference signal received power RSRP ratio target, a low signal to interference plus noise ratio SINR ratio target, a low rate ratio target, a latency target, a high physical resource block PRB load ratio target, an energy consumption target, an energy efficiency target, or a call drop rate target.

In a possible implementation, the intent management capability information further includes a first identifier and a second identifier, where
the first identifier is an identifier of the intent management capability information, and
the second identifier is an identifier of an intent management function object to which the intent management capability information belongs.

In a possible implementation, the communication interface is further configured to send the target intent information and the second identifier to the second apparatus.

According to a seventh aspect, an embodiment of this application provides a communication apparatus. The communication apparatus is used as a second apparatus, and the communication apparatus includes:
a communication interface and a processor connected to the communication interface, where
the communication interface is configured to send intent management capability information to a first apparatus, where the intent management capability information indicates intent management capability information supported by the second apparatus;
the communication interface is further configured to receive target intent information from the first apparatus, where the target intent information meets a constraint of the intent management capability information, and the target intent information meets a management requirement; and
the processor is configured to process the target intent information.

In a possible implementation, the intent management capability information includes one or both of the following:
the intent management capability information includes information about an intent object supported by the second apparatus, or
the intent management capability information includes information about an intent target supported by the second apparatus.

In a possible implementation, the information about the intent object includes one or more of the following:
type information of the intent object, granularity information of the intent object, network standard information of the intent object, or frequency domain information of the intent object; and
the information about the intent target includes one or more of the following:
   type information of the intent target, name information of the intent target, or a value range of the intent target.

In a possible implementation, the intent management capability information further includes:
whether the intent object supports a plurality of frequency domains, or whether the intent object supports a plurality of network standards; and
whether the second apparatus supports a plurality of intent targets or a constraint relationship between a plurality of intent targets supported by the second apparatus.

In a possible implementation, the type information of the intent object includes one or more of the following:
a radio network, a radio service, a core network, a core network service, a network slice, or a communication service;
the granularity information of the intent object includes one or more of the following:
   a public land mobile network PLMN granularity, a 5G quality of service indicator 5QI granularity, a single network slice selection assistance information S-NSSAI granularity, a user equipment UE granularity, a UE group granularity, a tenant granularity, a region granularity, or a raster granularity;
   the network standard information of the intent object includes: a 3G network, a 4G network, or a 5G network; and
   the frequency domain information of the intent object includes: frequency information or frequency band information.

In a possible implementation, the type information of the intent target includes one or more of the following:
a coverage-type target, a capacity-type target, a rate-type target, an energy efficiency-type target, a voice-type target, a latency-type target, or an experience-type target; and
the name information of the intent target includes one or more of the following:
   a weak reference signal received power RSRP ratio target, a low signal to interference plus noise ratio SINR ratio target, a low rate ratio target, a latency target, a high physical resource block PRB load ratio target, an energy consumption target, an energy efficiency target, or a call drop rate target.

In a possible implementation, the intent management capability information further includes a first identifier and a second identifier, where
the first identifier is an identifier of the intent management capability information, and
the second identifier is an identifier of an intent management function object to which the intent management capability information belongs; and
the second apparatus manages one or more intent management function objects, and each intent management function object includes one or more pieces of intent management capability information.

In a possible implementation, the communication interface is further configured to receive the target intent information and the second identifier from the first apparatus;
the processor is further configured to determine, based on the second identifier from the one or more intent management function objects, an intent management function object that executes the target intent information; and
the processor is further configured to create an intent based on the target intent information in the determined intent management function object that executes the target intent information.

An eighth aspect of this application provides a communication apparatus, including a communication interface; and
a processor connected to the communication interface. Based on the communication interface and the processor, the communication apparatus is enabled to perform the method according to any one of the first aspect, the second aspect, and/or the third aspect.

According to a ninth aspect, a communication system is provided. The communication system includes the communication apparatuses according to the fourth aspect and the fifth aspect.

According to a tenth aspect, a communication system is provided. The communication system includes the communication apparatuses according to the sixth aspect and the seventh aspect.

An eleventh aspect of this application provides a computer storage medium. The computer storage medium may be non-volatile. The computer storage medium stores computer-readable instructions; and when the computer-readable instructions are executed by a processor, the method in any implementation of the first aspect, the second aspect, or the third aspect is implemented.

A twelfth aspect of this application provides a computer program product including instructions. When the computer program product is run on a computer, the computer is enabled to perform the method in any implementation of the first aspect, the second aspect, or the third aspect.

A thirteenth aspect of this application provides a chip system. The chip system includes a processor and an interface circuit, configured to support a network device in implementing functions in the foregoing aspects, for example, sending or processing data and/or information in the foregoing methods. In a possible design, the chip system further includes a memory, and the memory is configured to store program instructions and data that are necessary for the network device. The chip system may include a chip, or may include a chip and another discrete component.

A fourteenth aspect of this application provides a communication apparatus. The communication apparatus includes:
a memory, including instructions; and
a processor, where when the processor executes the instructions, the communication apparatus is enabled to perform the method according to any one of the first aspect, the second aspect, and/or the third aspect.

### BRIEF DESCRIPTION OF DRAWINGS

FIG. 1 is a diagram of a structure of an architecture of a communication system;
FIG. 2 is a diagram of an architecture of a communication system 2000 to which an embodiment of this application is applied;
FIG. 3 is a diagram of an embodiment of an intent management method according to an embodiment of this application;
FIG. 4 is a diagram of intent management capability information according to an embodiment of this application;
FIG. 5 is another diagram of intent management capability information according to an embodiment of this application;
FIG. 6 is a diagram of an intent execution module according to an embodiment of this application;
FIG. 7 is a diagram of an application scenario according to an embodiment of this application;
FIG. 8 is a diagram of a hardware structure of a communication apparatus according to an embodiment of this application;
FIG. 9 is a diagram of an embodiment of a communication apparatus 900 according to an embodiment of this application;
FIG. 10 is a diagram of an embodiment of a communication apparatus 1000 according to an embodiment of this application; and
FIG. 11 is a diagram of a communication system 1100 according to an embodiment of this application.

### DESCRIPTION OF EMBODIMENTS

The following describes embodiments of this application. It is clear that the described embodiments are only some but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that, the descriptions termed in such a way are interchangeable in proper circumstances, so that embodiments can be implemented in orders other than the order illustrated or described in this application. In addition, the terms "include" and "have" and any other variants are intended to cover the non-exclusive inclusion. For example, a process, method, system, product, or device that includes a list of steps or modules is not necessarily limited to those expressly listed steps or modules, but may include other steps or modules not expressly listed or inherent to such a process, method, product, or device. Naming or numbering of steps in this application does not mean that steps in a method procedure need to be performed based on a time/logical sequence indicated by the naming or numbering. An execution sequence of procedure steps that have been named or numbered may be changed based on a technical objective to be implemented, provided that a same or similar technical effect can be achieved. Unit division in this application is logical division and there may be another division manner in actual application. For example, a plurality of units may be combined or integrated into another system, or some features may be ignored or not performed. In addition, the displayed or discussed mutual couplings or direct couplings or communication connections may be implemented through some interfaces. Indirect couplings or communication connections between the units may be implemented in an electrical form or another similar form. This is not limited in this application. In addition, the units or subunits described as separate parts may or may not be physically separate, may or may not be physical units, or may be distributed into a plurality of circuit units. Some or all of the units or subunits may be selected based on actual requirements to achieve the objectives of the solutions of this application.

Before specific solutions of this application are described, some terms in embodiments of this application are first explained, to facilitate understanding of a person skilled in the art.

### 1. Requirement device

The requirement device may also be referred to as a consumer, and is a device that uses a network and monitors network performance, to operate and maintain the network. Request information is provided based on a service requirement of the requirement device, to obtain network performance data for monitoring the network performance. The requirement device may be a business support system (business support system, BSS), a cross domain management system (cross domain management function, CD-MnF), or a domain management system (domain management function, domain-MnF).

### 2. Management device

The management device may also be referred to as a provider, and is configured to manage a device in a network that is used and monitored by a requirement device. The management device obtains network performance data and feeds back the network performance data to the requirement device based on request information proposed by the requirement device, to monitor network performance. The management device may be a cross domain management system (cross domain management function, CD-MnF), a domain management system (domain management function, domain-MnF), or a network element.

It should be noted that, the requirement device and the management device may be function units, or may be chip systems, or the like. This is not specifically limited in embodiments of this application.

### 3. Autonomous network (Autonomous Network)

The autonomous network is a network in which a telecommunication system (including a telecommunication network and an operation and management system thereof) implements self-management and control through an autonomous capability with as little manual intervention as possible.

### 4. Intent (Intent)

The intent is used to describe an expectation for a telecommunication system (including a network and a management system), including a requirement, a target, and a restriction. It is up to the telecommunication system to determine a specific solution to be used to meet the expectation. Examples of intents: a capacity intent (for example, a percent of high-load cells in a region 1 is 10%), a coverage intent (for example, a percent of weak coverage in the region 1 is 20%), and a rate intent (for example, a percent of low-rate users in the region 1 is 5%).

### 5. Intent conflict

The intent conflict is used to describe a conflict between a corresponding management operation performed by a telecommunication system (including a network and a management system) to meet an intent and a management operation performed by the telecommunication system to meet another intent. For example, the telecommunication system needs to increase a configuration parameter A to meet an intent 1, and needs to decrease the configuration parameter A to meet an intent 2. In this case, the telecommunication system cannot meet both the intent 1 and the intent 2, and an intent conflict occurs between the intent 1 and the intent 2.

### 6. Managed object (Managed Object)

The managed object (Managed Object) is used to describe information about a managed object or a management task in a management system. Creating the managed object indicates creating management information in the management system, so that the management system can manage the managed object or execute the management task based on the management information.

In embodiments of this application, an intent management function object means that a managed object is a managed object of an intent management function, and is also referred to as the managed object of the intent management function.

### 7. Cell

The cell is a radio coverage region identified by a base transceiver station identity code or a cell global identifier. One base station includes one or more cells.

### 8. Raster

The raster (or a raster result) is a spatial data structure, and refers to dividing an earth surface into grid arrays of uniform sizes and close proximity. Each grid is defined as a picture element or a pixel by a row and a column, and includes a code indicating an attribute type or a value of the pixel, or includes only a pointer to an attribute record of the pixel. Therefore, a raster structure is a data organization in which regular arrays are used to represent spatial surface features or phenomenon distribution, and each piece of data in the organization represents a non-geometric attribute feature of a surface feature or a phenomenon.

### 9. Frequency domain information

The frequency domain information in embodiments of this application includes but is not limited to: frequency information or frequency band information.

Specifically, the frequency information refers to a center frequency of a segment of frequency, and a number of the center frequency is referred to as a frequency. A frequency band refers to a segment of continuous frequencies between two specified boundary frequencies. The frequency domain information may also be band information, where the band information indicates a location of a segment of continuous frequencies in a spectrum. For example, an upper limit frequency and a lower limit frequency of the continuous frequencies may be used for indication, or an intermediate value between an upper limit frequency and a lower limit frequency may be used for indication.

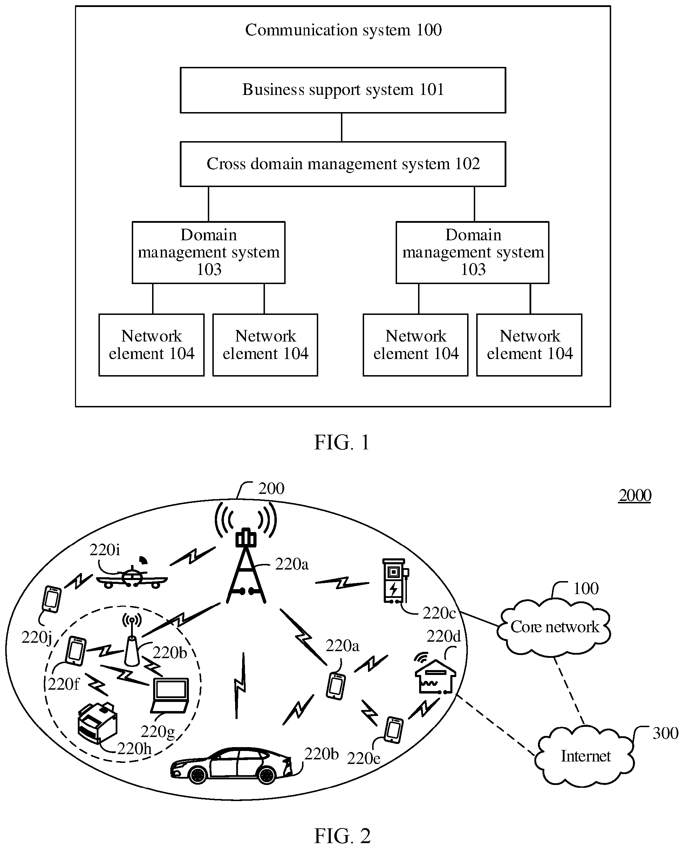

The intent management method provided in embodiments of this application is applied to a diagram of a structure of an architecture of a communication system shown in FIG. 1. As shown in FIG. 1, the communication system 100 includes a business support system (business support system, BSS) 101, a cross domain management system (cross domain management function, CD-MnF) 102, a domain management system (domain management function, domain-MnF) 103, and a plurality of network elements 104 in a mobile communication network. It should be noted that, FIG. 1 shows four network elements 104 as an example, which respectively represent four independent network elements. For a logical architecture of the communication system 100, refer to FIG. 1. The domain management system 103 may also be understood in a same manner.

The business support system 101 is oriented to a communication service (communication service), and may provide functions and management services such as charging, settlement, accounting, customer service, business, network monitoring, communication service life cycle management, and service intent translation.

The business support system 101 includes an operating system of an operator or an operating system of a vertical industry (vertical operational technology system). For example, the business support system 101 may be a communication service management service producer (communication service MnS producer) or a communication service management service consumer (communication service MnS consumer).

The business support system 101 may also be referred to as a service operating system, a service operating unit, or a communication service management function (communication service management function) unit.

The cross domain management system 102 may also be referred to as a network management function (network management function, NMF). The cross domain management system 102 provides one or more of the following management functions or management services: network life cycle management, network deployment, network fault management, network performance management, network configuration management, network guarantee, a network optimization function, translation of a network intent from a communication service provider (intent from communication service provider, intent-CSP), translation of a network intent from a communication service consumer (intent from communication service consumer, intent-CSC), and the like. The network herein may include one or more network elements, subnets, or network slices. For example, the cross domain management system 102 may be a network slice management function (network slice management function, NSMF), a management data analytics function (management data analytical function, MDAF), a cross domain self-organization network function (self-organization network function, SON-function), or a cross domain intent management function unit.

It should be noted that, in some deployment scenarios, the cross domain management system 102 may also provide one or more of the following management functions or management services: subnet life cycle management, subnet deployment, subnet fault management, subnet performance management, subnet configuration management, subnet guarantee, a subnet optimization function, translation of a subnet intent from a communication service provider, translation of a subnet intent from a communication service consumer, and the like. The subnet may include a plurality of small subnets or a plurality of network slice subnets. The cross domain management system 102 may also be referred to as a network management service producer.

The cross domain management system 120 includes one or more network elements. Alternatively, the subnet herein may also include one or more subnets, that is, the one or more subnets form a subnet with a larger coverage area. Alternatively, the subnet herein may also include one or more network slice subnets. In this case, the domain management system 103 may alternatively be a network slice subnet management function (network slice subnet management function, NSSMF), a domain management data analytics system (domain management data analytical function, domain-MDAF), a domain SON-function, or a domain intent management function unit.

The domain management system 103 may also be referred to as a subnet management service producer (subnet communication service producer) or a network function management service producer (network communication service producer).

The domain management system 103 may be deployed in a manner including but not limited to the following manners:
1. The domain management system 103 is deployed based on a network type, and may be deployed as one or a combination of the following: an access network domain management system, a core network domain management system, and a transport network domain management system.
2. The domain management system 103 is deployed based on a region, and may be deployed as a domain management system of a region, for example, a Shanghai domain management system or a Beijing domain management system. In other words, a set of network elements or cells included in a region may also be considered as a subnet, namely, a region network.
3. The domain management system 103 is deployed based on a home device vendor, and may be deployed as a domain management system of a device vendor, for example, a domain management system of a device vendor AA or a domain management system of a device vendor BB. In other words, a device set of a device vendor is considered as a subnet, namely, a region network.
4. The domain management system 103 is deployed based on a network standard, for example, a 5G network, a Wi-Fi network, or a radio frequency identification (Radio Frequency Identification, RFID) network.

The domain management system 103 may also be referred to as a domain management unit.

The network element 104 is an entity that provides a network service, and includes a core network element, an access network element, and the like. For example, the core network element may include but is not limited to an access and mobility management function (access and mobility management function, AMF) entity, a session management function (session management function, SMF) entity, a policy control function (policy control function, PCF) entity, a network data analytics function (network data analysis function, NWDAF) entity, a network repository function (network repository function, NRF), a gateway, and the like. The access network element may include but is not limited to various base stations (for example, a next generation NodeB (next generation NodeB, gNB) and an evolved NodeB (evolved NodeB, eNB)), a central control unit (central unit control panel, CUCP), a central unit (central unit, CU), a distributed unit (distributed unit, DU), a central unit user panel (central unit user panel, CUUP), and the like.

The network element 104 may also provide one or more of the following management functions or management services: network element life cycle management, network element deployment, network element fault management, network element performance management, network element guarantee, a network element optimization function, translation of a network element intent, and the like.

The network element 104 may also be referred to as a network function management service producer (network function MnS producer).

In a service-based management architecture, a management service producer (Management Service Producer, MnS Producer) and a management service consumer (Management Service Consumer, MnS Consumer) are focused. It should be understood that, when the management service is a management service provided by the service operation unit, the service operation unit is the management service producer, and another service operator unit may be the management service consumer.

When the management service is a management service provided by the cross domain management function unit, the cross domain management function unit is the management service producer, and the service operation unit is the management service consumer.

When the management service is a management service provided by the domain management function unit, the domain management function unit is the management service producer, and the cross domain management function unit or the service operation unit is the management service consumer.

When the management service is a management service provided by the foregoing network element, the network element is the management service producer, and the domain management function unit, the cross domain management function unit, or the service operation unit is the management service consumer.

In embodiments of this application, a first apparatus is mainly configured to: generate intent information, and monitor an execution status of an intent. A second apparatus is mainly configured to: receive the intent information from the first apparatus, and process the intent information. Specifically, the processing the intent information includes: translating the intent information, creating an intent, implementing the intent, and determining an evaluation result of the implemented intent. Then, the second apparatus feeds back the evaluation result of the implemented intent to the first apparatus. Further, the first apparatus obtains intent management capability information from the second apparatus, and generates target intent information based on the intent management capability information and a management requirement. The second apparatus receives the target intent information from the first apparatus and processes the target intent information.

In a possible implementation, the first apparatus is the cross domain management system 102, and the second apparatus is the domain management system 103. Alternatively, the cross domain management system 102 includes the first apparatus, and the domain management system 103 includes the second apparatus. For example, in a communication scenario of a single domain autonomous network, the cross domain management system 102 receives the intent management capability information from the domain management system 103.

In another possible implementation, the first apparatus is the business support system 101, and the second apparatus is the cross domain management system 102. Alternatively, the business support system 101 includes the first apparatus, and the cross domain management system 102 includes the second apparatus. For example, in a communication scenario of a cross domain autonomous network, the business support system 101 receives the intent management capability information from the cross domain management system 102.

In still another possible implementation, the first apparatus is a third-party system outside an autonomous network (for example, a third-party system other than the communication system 100 in FIG. 1), and the second apparatus is the business support system 101. Alternatively, a third-party system includes the first apparatus, and the business support system 101 includes the second apparatus. For example, the third-party system is an enterprise system.

Further, in the service-based management architecture, the first apparatus is the management service consumer, the second apparatus is a management service producer, and a logical interface between the first apparatus and the second apparatus carries an intent management service (which is specifically implemented by transmitting the intent management capability information).

The first apparatus and the second apparatus that perform the intent management method provided in this application may be implemented by one device, or may be jointly implemented by a plurality of devices, or may be a functional module in a device, or may be a chip in a device. This is not specifically limited in embodiments of this application. It may be understood that, the foregoing functions may be network elements in a hardware device, or may be software functions running on dedicated hardware, or may be virtualization functions instantiated on a platform (for example, a cloud platform).

FIG. 2 is a diagram of an architecture of a communication system 2000 to which an embodiment of this application is applied. As shown in FIG. 2, the communication system includes a radio access network 200 and a core network 100. Optionally, the communication system 2000 may further include an internet 300. The radio access network 200 may include at least one radio access network device (for example, 220a and 220b in FIG. 2), and may further include at least one terminal (for example, 220a to 220j in FIG. 2). The terminal is connected to the radio access network device in a wireless manner, and the radio access network device is connected to the core network in a wireless or wired manner. A core network device and the radio access network device may be independent and different physical devices, or a function of the core network device and a logical function of the radio access network device may be integrated into a same physical device, or some functions of the core network device and some functions of the radio access network device may be integrated into one physical device. A wired or wireless manner may be used for a connection between terminals and a connection between radio access network devices. FIG. 2 is only a diagram. The communication system may further include other network devices, for example, may further include a wireless relay device and a wireless backhaul device. This is not shown in FIG. 2.

The radio access network device is an access device used by a terminal to access the communication system in a wireless manner. The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that completes some functions of the base station, for example, may be a central unit (central unit, CU), or may be a distributed unit (distributed unit, DU). The CU herein completes functions of the radio resource control protocol and the packet data convergence protocol (packet data convergence protocol, PDCP) of the base station, and may further complete functions of the service data adaptation protocol (service data adaptation protocol, SDAP). The DU completes functions of a radio link control layer and a medium access control (medium access control, MAC) layer of the base station, and may further complete functions of a part or all of a physical layer. For detailed descriptions of the foregoing protocol layers, reference may be made to technical specifications related to the 3rd generation partnership project (3rd generation partnership project, 3GPP). The radio access network device may be a macro base station (for example, 220a in FIG. 2), or may be a micro base station or an indoor base station (for example, 220b in FIG. 2), or may be a relay node or a donor node. A specific technology and a specific device form that are used by the radio access network device are not limited in embodiments of this application. For ease of description, the following provides descriptions by using an example in which a base station serves as the radio access network device.

A terminal is a device having a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an airplane, a ship, a robot, a mechanical arm, a smart home device, or the like. A specific technology and a specific device form that are used by the terminal are not limited in embodiments of this application.

The base station and the terminal may be fixed or movable. The base station and the terminal may be deployed on land, including an indoor or outdoor scenario, and a handheld or a vehicle-mounted scenario; or may be deployed on water; or may be deployed on an airplane, a balloon, and a man-made satellite. Application scenarios of the base station and the terminal are not limited in embodiments of this application.

Roles of the base station and the terminal may be relative. For example, a helicopter or an uncrewed aerial vehicle 220i in FIG. 2 may be configured as a mobile base station, and for a terminal 220j accessing the radio access network 200 through 220i, the terminal 220i is a base station. However, for the base station 220a, 220i is a terminal. In other words, communication between 220a and 220i is performed based on a radio air interface protocol. Certainly, communication between 220a and 220i may alternatively be performed based on an interface protocol between base stations. In this case, for 220a, 220i is also a base station. Therefore, both the base station and the terminal may be collectively referred to as communication apparatuses, 220a and 220b each in FIG. 2 may be referred to as a communication apparatus having a function of a base station, and 220a to 220j each in FIG. 2 may be referred to as a communication apparatus having a function of a terminal.

Communication between the base station and the terminal, between the base stations, and between the terminals may be performed based on a licensed spectrum, or may be performed based on an unlicensed spectrum, or may be performed based on both the licensed spectrum and the unlicensed spectrum. Communication may be performed based on a spectrum below 6 gigahertz (gigahertz, GHz), or may be performed based on a spectrum above 6 GHz, or may be performed based on both the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A function of the terminal may be performed by a module (for example, a chip or a modem) in the terminal, or may be performed by an apparatus including the function of the terminal.

A management interface of an intent is introduced into the network management system. A user of a network expresses an intent to a management device through the management interface of the intent, and the management device converts the intent into a specific network instruction to manage the network device. This improves management efficiency, reduces implementation complexity, and reduces operations and maintenance costs. However, the intent does not well match an actual network environment, and the intent usually needs to be repeatedly delivered for a plurality of times. Only in this way, the intent can match the actual network environment and a service requirement can be met. The foregoing process is time-consuming and inefficient.

Based on this, embodiments of this application provide an intent management method. A first apparatus receives intent management capability information from a second apparatus, where the intent management capability information indicates intent management capability information supported by the second apparatus. Then, the first apparatus generates target intent information based on first information and a service requirement. Finally, the first apparatus sends the target intent information to the second apparatus. The target intent information is generated based on the service requirement and the intent management capability information supported by the second apparatus, and the target intent information meets a management requirement. Therefore, a degree of matching between the target intent information and the second apparatus can be effectively improved. This avoids a problem that the target intent information does not match the second apparatus, avoids repeated adjustment of the delivered intent information, and improves efficiency.

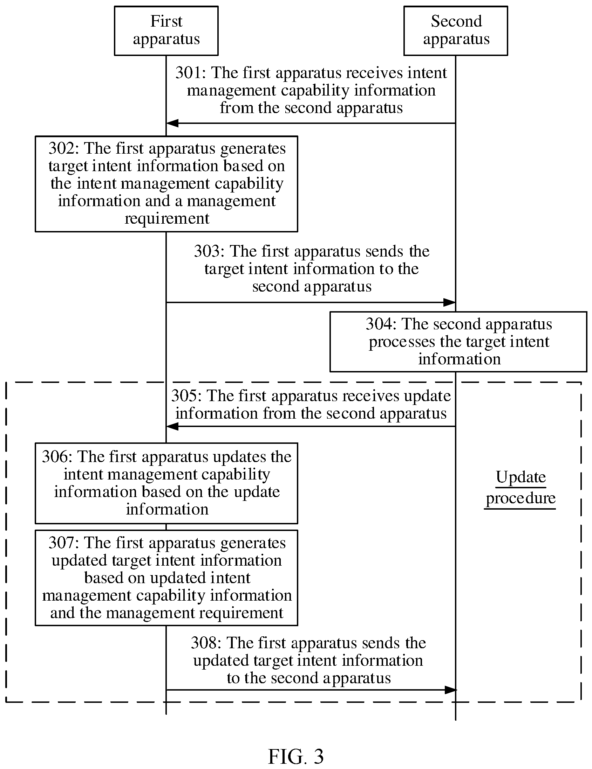

The following describes embodiments of this application with reference to the accompanying drawings. FIG. 3 is a diagram of an embodiment of an intent management method according to an embodiment of this application. Embodiments of this application provide an intent management method. The intent management method includes:
301: A first apparatus receives intent management capability information from a second apparatus.

In embodiments of this application, the first apparatus receives the intent management capability information from the second apparatus. The intent management capability information provided in embodiments of this application is first described.

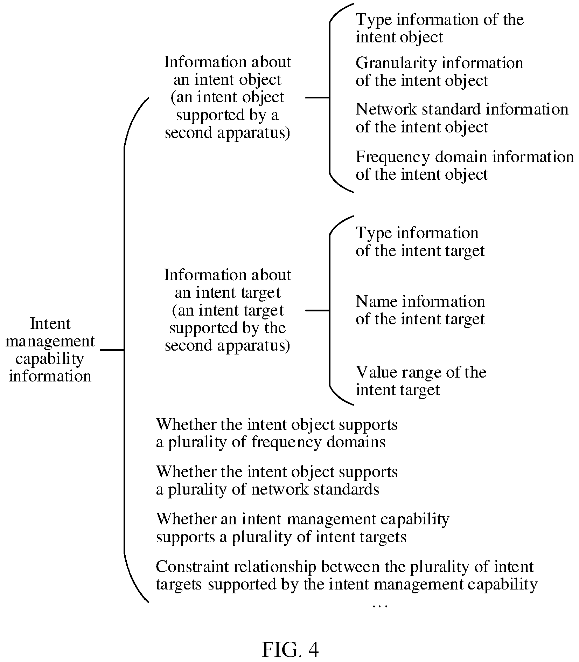

Specifically, for ease of understanding, refer to FIG. 4. FIG. 4 is a diagram of intent management capability information according to an embodiment of this application. The intent management capability information provided in embodiments of this application includes but is not limited to:
information about an intent object (the intent object is an intent object supported by the second apparatus), information about an intent target (the intent target is an intent target supported by the second apparatus), whether the intent object supports a plurality of frequency domains, whether the intent object supports a plurality of network standards, whether the intent management capability information supports a plurality of intent targets, a constraint relationship between a plurality of intent targets supported by the intent management capability information, or the like.

Detailed descriptions are provided below.

### A. Intent object

The information about the intent object includes one or more of the following:
Type information of the intent object: The type information of the intent object is also referred to as a type of a supported intent object (supportedObjectType). For example, the type information of the intent object includes but is not limited to: a radio network (RadioNetwork), a radio service (RadioService), a core network (5GCNetwork), a core network service (5GCService), a network slice (NetworkSlice), or a communication service (CommunciationService).

Granularity information of the intent object: The granularity information of the intent object is also referred to as a granularity of a supported intent object (supportedObjectGranuality). For example, the granularity information of the intent object includes but is not limited to: a public land mobile network PLMN granularity, a 5G quality of service indicator 5QI granularity, a single network slice selection assistance information S-NSSAI granularity, a user equipment UE granularity, a UE group granularity, a tenant granularity, a region granularity, or a raster granularity.

Frequency domain information of the intent object: The frequency domain information of the intent object is also referred to as supported frequency domain information. In embodiments of this application, the frequency domain information of the intent object includes but is not limited to: frequency information of the intent object or frequency band information of the intent object. The frequency information of the intent object is also referred to as supported frequency information, for example, 100 megahertz (Megahertz, MHz). The frequency band information of the intent object is also referred to as supported frequency band information (supportedFrequencyBands), for example, 100 MHz to 200 MHz.

Network standard information of the intent object: The network standard information of the intent object is also referred to as a supported network standard (supportedRATs), for example, a 3G network (for example, an E-UTRAN network), a 4G network (for example, an LTE network), or a 5G network (for example, an NR network).

The intent management capability information may further include whether the intent object supports a plurality of frequency domains, which is also referred to as whether a plurality of frequencies are supported or whether a plurality of frequency bands are supported (isMultiFrequencyBandsSupported). A specific meaning is whether the intent object supports the plurality of frequencies or the plurality of frequency bands.

The intent management capability information may further include whether the intent object supports a plurality of network standards, which is also referred to as whether a plurality of network standards are supported (isMultiRATsSupported). A specific meaning is whether the intent object supports the plurality of network standards.

### B. Intent target

The information about the intent target includes one or more of the following:
Type information of the intent target: The type information of the intent target is also referred to as a type of a supported intent target (supportedTargetCategories). For example, the type information of the intent target includes but is not limited to: a coverage-type target (Coverage), a capacity-type target (Capacity), a rate-type target (RANUEThroughput), an energy efficiency-type target (EnergyEfficiency), a voice-type target (Voice), a latency-type target (Latency), or an experience-type target (Experience).

Name information of the intent target: The name information of the intent target is also referred to as a supported intent target name (supportedTargetName), and includes a weak reference signal received power RSRP ratio target (WeakRSRPRatioTarget), a low signal to interference plus noise ratio SINR ratio target (LowSINRRatioTarget), an average rate ratio target (AveRANUEThroughputTarget), a low rate ratio target (LowRANUEThroughputRatioTarget), a latency target (LatencyTarget), a high physical resource block PRB load ratio target (HighPRBLoadRatioTarget), an energy consumption target (EnergyConsumptionTarget), an energy efficiency target (EnergyEfficiencyTarget), or a call drop rate target (CallDropRateTarget).

Value range of the intent target: The value range of the intent target is used to describe a range of the intent target that can be supported by the second apparatus. For example, when the intent target is the latency-type target, that is, the intent target name is a latency target, the value range of the intent target may be 1 millisecond to 5 milliseconds.

Further, the intent management capability information may further include whether the second apparatus supports a plurality of intent targets. For example, the intent management capability information of the second apparatus indicates whether the capacity-type target and the rate-type target are supported. When intent management capability information #1 indicates that a second apparatus #1 supports the capacity-type target and the rate-type target, an intent management function object that corresponds to the intent management capability information #1 and that is in the second apparatus #1 may execute an intent including the capacity-type target and the rate-type target.

Further, the intent management capability information may further include a constraint relationship between a plurality of intent targets supported by the second apparatus. The constraint relationship is also referred to as a constraint relationship between intent targets (TargetConstraint), and is used to describe a constraint rule between a plurality of intent targets indicated by the intent management capability information. For example, the energy consumption-type target and the rate-type target cannot be both higher than a specified value. For another example, the constraint relationship between the intent targets may further limit which intent targets in the plurality of intent targets indicated by the intent management capability information can be set together and which intent targets in the plurality of intent targets indicated by the intent management capability information cannot be set together. For example, for the intent management capability information #1, the constraint relationship between the intent targets indicates that the coverage-type target and the rate-type target can be set together, and the rate-type target and the energy efficiency-type target cannot be set together.

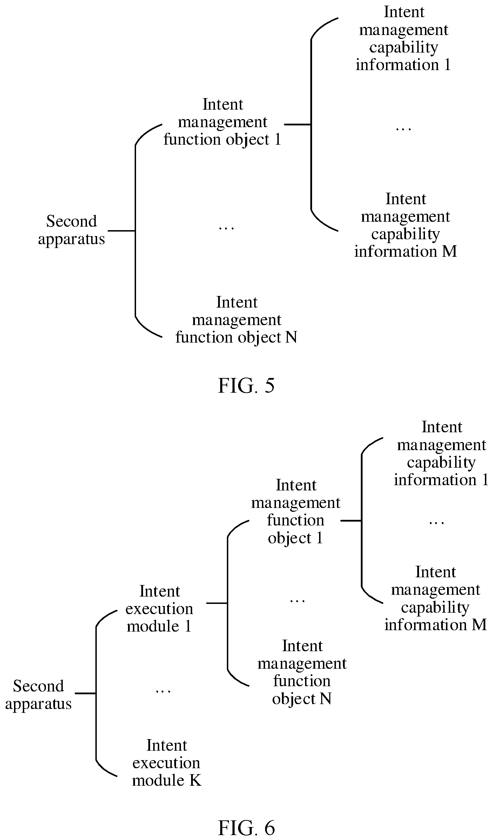

C. Further, the intent management capability information further includes a first identifier and a second identifier. The first identifier is an identifier of an intent management capability (IDMCapability Id), and the second identifier is an identifier of an intent management function object to which the intent management capability information belongs. For ease of understanding, refer to FIG. 5. FIG. 5 is another diagram of intent management capability information according to an embodiment of this application. In embodiments of this application, the second apparatus may manage one or more intent management function objects. For example, the second apparatus shown in FIG. 5 manages intent management function objects 1 to N, where N is a positive integer. Each intent management function object includes one or more pieces of intent management capability information. For example, the intent management function object 1 shown in FIG. 5 includes intent management capability information 1 to M, where M is a positive integer. The intent management function object is a managed object (Intent driven management function, or Intent handling Function), and is used to manage the intent management capability information.

In a possible implementation, the second apparatus may further include one or more intent execution modules. The intent execution module may be a software module (for example, an application program or a cloud service), and the intent execution module may alternatively be a hardware module (for example, a hardware device or a card). The second apparatus installs or obtains the intent execution module, so that the second apparatus supports one or more intent management function objects, and the second apparatus supports one or more intent management capabilities.

For ease of understanding, refer to FIG. 6. FIG. 6 is a diagram of an intent execution module according to an embodiment of this application. For example, the second apparatus includes an intent execution module 1 to an intent execution module K, where K is a positive integer. The intent execution module 1 includes intent management function objects 1 to N, and the intent management function object 1 includes intent management capability information 1 to M.

It should be noted that, the first apparatus receives the intent management capability information from the second apparatus in a plurality of manners. Descriptions are provided below.

In a possible implementation, the second apparatus actively sends the intent management capability information to the first apparatus. In an example, when the intent management capability information of the second apparatus changes, the second apparatus sends changed intent management capability information to the first apparatus (for example, after a new intent execution module is installed on the second apparatus, the second apparatus sends, to the first apparatus, intent management capability information corresponding to the intent execution module). In another example, the second apparatus periodically sends the intent management capability information to the first apparatus, to ensure that intent management capability information used by the first apparatus to generate target intent information matches the actual intent management capability information of the second apparatus.

In another possible implementation, the first apparatus actively delivers a query request to the second apparatus. The second apparatus reports the intent management capability information to the first apparatus in response to the query request. For example, before generating the target intent information, the first apparatus sends the query request to the second apparatus based on a management requirement. The second apparatus sends the intent management capability information to the first apparatus based on the query request.

Optionally, the query request may further include the first identifier and the second identifier. For example, if the first apparatus wants to obtain the intent management capability information #1 of an intent management function object #1 in the second apparatus, the first apparatus sends the query request to the second apparatus. The query request includes the first identifier (namely, an identifier of the intent management capability information #1) and the second identifier (namely, an identifier of the intent management function object #1).

302: The first apparatus generates the target intent information based on the intent management capability information and the management requirement.

In this embodiment, after the first apparatus obtains one or more pieces of intent management capability information, the first apparatus generates the target intent information based on the intent management capability information and the management requirement.

Optionally, the management requirement may be delivered by an operator, or the management requirement may be delivered by a third-party system (for example, a company system). This is not limited in embodiments of this application. The management requirement includes a service requirement or another requirement. This is not limited in embodiments of this application.

Specifically, after obtaining the management requirement, the first apparatus selects, from the one or more pieces of intent management capability information based on the management requirement, intent management capability information that matches the management requirement, and then generates the target intent information based on the found intent management capability information and the management requirement.

For example, the intent management capability information obtained by the first apparatus includes the intent management capability information #1 and intent management capability information #2. The intent management capability information #1 is shown in Table 1.

**Table 1**

| | |
|---|---|
| Intent object | A type of a supported object is RadioNetwork, supported granularities are a 5QI granularity and an S-NSSAI granularity, and a supported network standard is NR |
| Whether the intent object supports a plurality of network standards | No |
| Intent target | A name of a supported intent target is a weak RSRP ratio target (WeakRSRPRatioTarget), an average rate ratio target (AveRANUEThroughputTarget), or an energy efficiency target (EnergyEfficiencyTarget) |
| Intent object | A type of a supported object is RadioNetwork, supported granularities are a 5QI granularity and an S-NSSAI granularity, and a supported network standard is NR |
| Whether a plurality of intent targets are supported | No |

The intent management capability information #2 is shown in Table 2.

**Table 2**

| | |
|---|---|
| Intent object | A type of a supported object is RadioNetwork, supported granularities are a 5QI granularity and an S-NSSAI granularity, and supported network standards are E-UTRAN and NR |
| Whether the intent object supports a plurality of network standards | Yes |
| Intent target | Names of supported intent targets are a weak RSRP ratio target (WeakRSRPRatioTarget), an average rate ratio target (AveRANUEThroughputTarget), and an energy efficiency target (EnergyEfficiencyTarget) |
| Whether a plurality of intent targets are supported | Yes |

For example, the management requirement is as follows: For a radio network covered by both a 4G network and a 5G network, there is a requirement for collaboration between an experience target and an energy saving target.

The first apparatus generates the target intent information based on the intent management capability information # 1, the intent management capability information # 2, and the management requirement. For example, the target intent information is as follows: A type of an expected intent object is the RadioNetwork, network standards of the expected intent object are the E-UTRAN and the NR, expected intent targets are that the average rate ratio target is greater than five megabits per second (megabits per second, Mbps), and that the energy efficiency target is less than 100 megabits per second/kWh (Mbps/kWh).

303: The first apparatus sends the target intent information to the second apparatus.

In this embodiment, after the first apparatus generates the target intent information, the first apparatus sends the target intent information to the second apparatus.

In a possible implementation, the first apparatus selects a specific second apparatus, and intent management capability information associated with the second apparatus is consistent with the intent management capability information corresponding to the target intent information. Then, the first apparatus sends the target intent information to the specific second apparatus.

In another possible implementation, the first apparatus determines the second apparatus based on an indication of the management requirement. Then, the first apparatus sends the target intent information to the second apparatus.

Optionally, that the first apparatus sends the target intent information to the second apparatus includes: The first apparatus sends the target intent information and the second identifier (the second identifier is an identifier of an intent management function object to which the intent management capability information corresponding to the target intent information belongs) to the second apparatus. In this way, the second apparatus quickly determines the corresponding intent management function object based on the second identifier, to improve efficiency.

In another possible implementation, the first apparatus sends the target intent information and the second identifier to all second apparatuses. After receiving the target intent information and the second identifier, the second apparatus determines, based on the second identifier, whether the second apparatus needs to process the target intent information. When an identifier of an intent management function object included in the second apparatus is consistent with the received second identifier, the second apparatus needs to process the target intent information. When an identifier of an intent management function object included in the second apparatus is inconsistent with the received second identifier, the second apparatus does not need to process the target intent information, and the second apparatus discards the target intent information.

304: The second apparatus processes the target intent information.

In this embodiment, after receiving the target intent information, the second apparatus processes the target intent information. A specific processing manner includes but is not limited to:
The second apparatus creates, based on the target intent information, an intent (the created intent is also referred to as a created intent object) in an intent management function object corresponding to the target intent information. The intent includes the target intent information, and the intent object may further include the first identifier (the first identifier is an identifier of the intent management capability information corresponding to the target intent information).

Then, the second apparatus performs intent management, which specifically includes translation, execution, and evaluation of the intent.

Specifically, the translation of the intent includes translating the intent into policy information and/or a management task that can be executed by the second apparatus, for example, policy information and/or a management task that can be executed by a domain management system.

The execution of the intent includes executing the policy information and/or the management task that are/is output through the translation.

The evaluation of the intent includes collecting network performance data of the second apparatus, and determining whether the network performance data meets an intent target set in the intent, for example, determining whether an average rate of the second apparatus is greater than 5 Mbps.

Finally, feedback information is obtained based on the evaluation of the intent, and the feedback information indicates an evaluation result of the intent. For example, the feedback information indicates that the intent is met or the intent is not met. Optionally, when the feedback information indicates that the intent is not met, the feedback information may further include a reason why the intent is not met. For example, a target rate value of the intent target is set to be excessively high.

Further, the second apparatus may send the feedback information to the first apparatus. The first apparatus determines, based on the feedback information, whether the target intent information needs to be readjusted. Specifically, when the feedback information indicates that the intent is not met, the first apparatus reselects matched intent management capability information from a plurality of pieces of intent management capability information based on the management requirement and the feedback information. Then, the first apparatus generates new target intent information based on the reselected intent management capability information and the management requirement, and delivers the target intent information to the second apparatus.

305: The first apparatus receives update information from the second apparatus.

Step 305 to step 308 are optional. Details are as follows:
In this embodiment, the first apparatus receives the update information from the second apparatus. The update information indicates that the intent management capability information supported by the second apparatus changes.

Specifically, that the intent management capability information supported by the second apparatus changes includes but is not limited to:
The second apparatus adds supported intent management capability information. For example, a new intent execution module is installed on the second apparatus.

Alternatively, the second apparatus deletes the supported intent management capability information. For example, the installed intent execution module is uninstalled from the second apparatus.

Alternatively, the second apparatus modifies the supported intent management capability information. For example, when network performance of the second apparatus changes, the second apparatus modifies the supported intent management capability information.

For example, when the intent execution module of the second apparatus is updated (for example, upgraded), or the network performance (or a network capability) of the second apparatus (for example, the domain management system) changes, the second apparatus determines that the intent management capability information changes. The second apparatus uses the changed intent management capability information as the update information and reports the update information to the first apparatus.

In a possible implementation, the update information further includes the first identifier and the second identifier. For example, when the second apparatus determines that the changed intent management capability information is associated with one or more intents, the update information sent by the second apparatus further includes the first identifier and the second identifier. For example, an intent #A currently executed by the second apparatus is associated with the intent management capability information #1, the intent #A is generated based on the intent management capability information #1, and the second apparatus creates the intent #A in an intent management function object #A and executes the intent #A. When the second apparatus detects that the intent management capability information #1 changes, the second apparatus sends the update information to the first apparatus. The update information indicates the changed intent management capability information #1, and the update information further includes the identifier of the intent management capability information #1 and an identifier of the intent management function object #A. In this way, the first apparatus can quickly search for the intent management function object #A in the first apparatus based on the identifier of the intent management function object #A and the identifier of the intent management capability information #1, and update the intent management capability information #1 in the intent management function object #A.

In another possible implementation, when the second apparatus determines that the changed intent management capability information is associated with one or more intents, the update information may further include identifiers of the one or more intents.

306: The first apparatus updates the intent management capability information based on the update information.

In this embodiment, after receiving the update information from the second apparatus, the first apparatus determines the changed intent management capability information in the first apparatus. Then, the first apparatus updates the intent management capability information based on the update information.

In a possible implementation, the update information further includes the first identifier and the second identifier. The first apparatus determines the changed intent management function object from the one or more intent management function objects of the second apparatus based on the second identifier. Then, the first apparatus determines the changed intent management capability information from the changed intent management function object based on the first identifier. In this way, the first apparatus can quickly search for the intent management function object in the first apparatus based on the identifier of the intent management function object and the identifier of the intent management capability information, and then quickly determine the updated intent management capability information in the intent management function object.

In another possible implementation, when the second apparatus determines that the changed intent management capability information is associated with one or more intents, the update information may further include identifiers of the one or more intents. The second apparatus may quickly determine, based on the identifiers of the intents, the intents that need to be updated.

When the changed intent management capability information is associated with the intents, the intents associated with the changed intent management capability information also need to be updated. In this case, step 307 is performed after step 306.

307: The first apparatus generates updated target intent information based on the updated intent management capability information and the management requirement.

In this embodiment, the first apparatus generates the updated target intent information based on the updated intent management capability information and the management requirement. Descriptions are provided below based on different cases indicated by the update information.
1. When the update information indicates that the updated intent management capability information is related to the existing intent management function object, the intent included in the intent management function object is updated based on the updated intent management capability information. The first apparatus generates the updated target intent information based on the updated intent management capability information and the management requirement.
2. When the update information indicates that the updated intent management capability information belongs to a newly added intent management function object, the updated intent management capability information is newly added intent management capability information. The first apparatus detects whether the existing intent needs to be associated with the newly added intent management function object. If the existing intent needs to be associated with the newly added intent management function object, the target intent information generated in step 307 indicates that the intent is associated with the newly added intent management function object.
3. When the update information indicates that the second apparatus deletes the supported intent management capability information, the second apparatus deletes an intent management function object corresponding to the intent management capability information. The first apparatus needs to re-match an existing intent with another intent management function object, and the existing intent belongs to the deleted intent management function object. Specifically, the first apparatus determines, based on the management requirement and the update information, other intent management capability information that matches the existing intent. Then, the first apparatus re-adjusts the existing intent based on the other intent management capability information and the management requirement, and generates updated target intent information. The updated target intent information indicates an updated existing intent.

For example, the update information indicates that the second apparatus deletes supported intent management capability information #A, and the intent management capability information #A corresponds to the intent #A. The first apparatus determines, based on the management requirement and the update information, intent management capability information #B that matches the intent #A. Then, the first apparatus re-adjusts the intent #A based on the intent management capability information #B and the management requirement, and generates updated target intent information. The updated target intent information indicates an intent #A', and the intent #A' is an updated intent #A.

308: The first apparatus sends the updated target intent information to the second apparatus.

Embodiments of this application provide an intent management method. A first apparatus receives intent management capability information from a second apparatus, where the intent management capability information indicates intent management capability information supported by the second apparatus. Then, the first apparatus generates target intent information based on first information and a service requirement. Finally, the first apparatus sends the target intent information to the second apparatus. The target intent information is generated based on the service requirement and the intent management capability information supported by the second apparatus, and the target intent information meets a management requirement. Therefore, a degree of matching between the target intent information and the second apparatus can be effectively improved. This avoids a problem that the target intent information does not match the second apparatus, avoids repeated adjustment of the delivered intent information, and improves efficiency. The first apparatus (for example, an operator) may learn of, in a timely manner, the intent management capability information of the second apparatus (for example, an autonomous network) managed by the first apparatus. When the intent management capability information of the second apparatus changes, an intent corresponding to the intent management capability information may be updated in a timely manner, to improve a degree of matching between the delivered intent and the second apparatus. The intent management capability information may further include a first identifier and a second identifier. The first identifier is an identifier of the intent management capability information, and the second identifier is an identifier of an intent management function object to which the intent management capability information belongs. After obtaining the intent management capability information, the first apparatus may manage the intent management capability information based on the first identifier and the second identifier, to improve processing efficiency of subsequently generating a target intent. The update information sent by the second apparatus to the first apparatus may further include the first identifier and the second identifier. Therefore, the first apparatus may quickly determine the changed intent management capability information based on the first identifier and the second identifier, to subsequently update the intent management capability information. When delivering the target intent information, the first apparatus may further deliver a second identifier corresponding to an intent indicated by the target intent information. In this way, the second apparatus determines a matched intent management function object based on the second identifier, and then creates the intent in the intent management function object based on the target intent information. This improves a degree of matching between the intent and the second apparatus, ensures that the second apparatus selects an appropriate intent management function object to create and execute the intent, and improves execution efficiency of the intent.

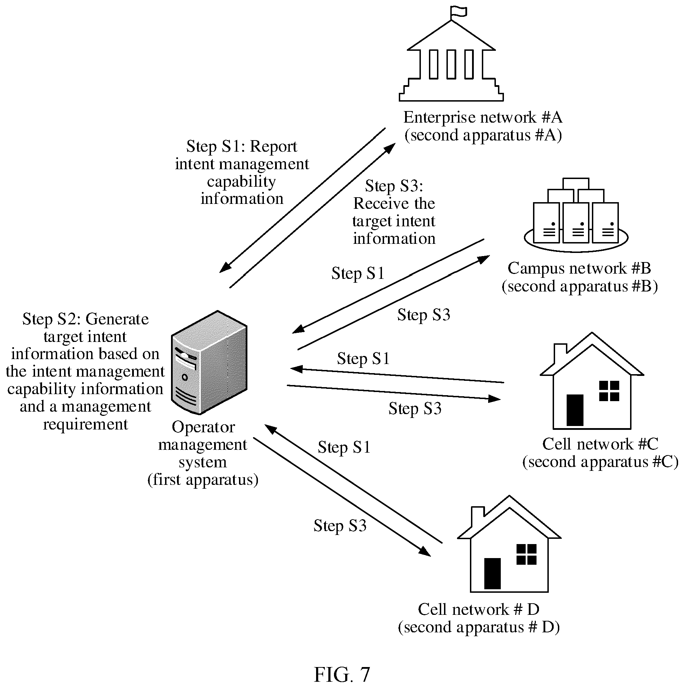

With reference to the foregoing embodiments, the following describes an application scenario in this application. FIG. 7 is a diagram of an application scenario according to an embodiment of this application. The application scenario includes at least one first apparatus and a plurality of second apparatuses. The first apparatus is an operator management system. The plurality of second apparatuses include: a second apparatus #A, where the second apparatus #A manages an enterprise network #A; a second apparatus #B, where the second apparatus #B manages a campus network #B; a second apparatus #C, where the second apparatus #C manages a cell network #C; and a second apparatus #D, where the second apparatus #D manages a cell network #D.

Specifically, in step S1, each second apparatus reports intent management capability information of the second apparatus to the first apparatus.

In step S2, the first apparatus generates target intent information based on a management requirement and the intent management capability information.

In step S3, the first apparatus sends the target intent information to each second apparatus.

It is not shown in the figure that, each second apparatus may further send update information to the first apparatus. Correspondingly, the first apparatus generates updated target intent information based on the update information and the management requirement. The first apparatus sends the updated target intent information to the second apparatus.

The foregoing mainly describes the solutions provided in embodiments of this application from the perspective of the methods. It may be understood that, to implement the foregoing functions, a communication apparatus includes a corresponding hardware structure and/or software module for performing each function. A person skilled in the art should easily be aware that, in combination with modules and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

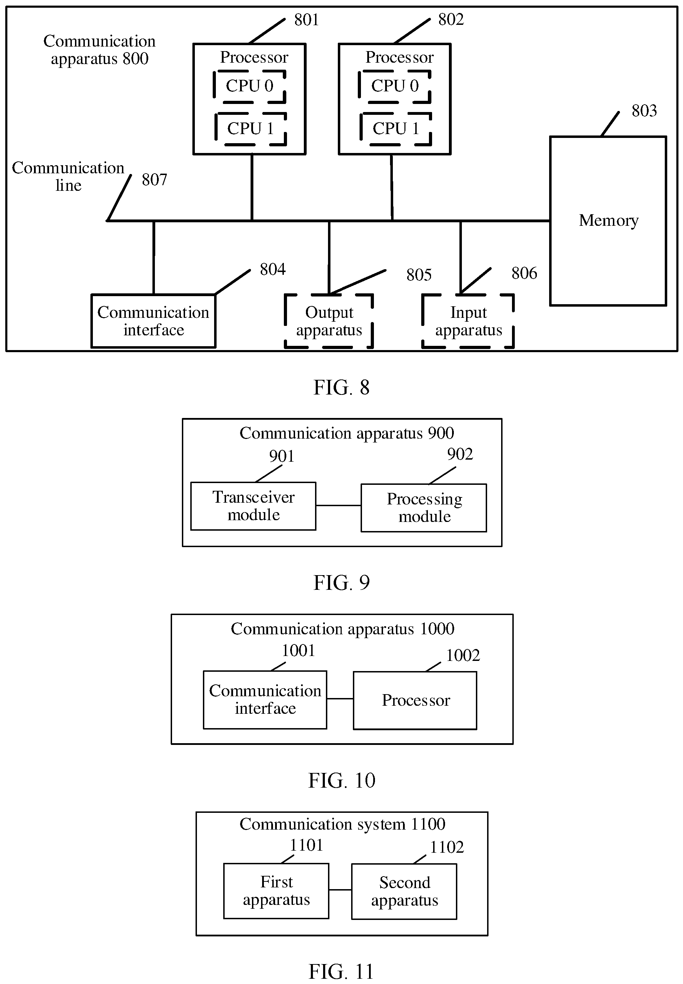

FIG. 8 is a diagram of a hardware structure of a communication apparatus according to an embodiment of this application. As shown in FIG. 8, the communication apparatus may include at least one processor 801, a communication line 807, a memory 803, and at least one communication interface 804.

The processor 801 may be a general-purpose central processing unit (central processing unit, CPU), a microprocessor, an application-specific integrated circuit (application-specific integrated circuit, server-side IC), or one or more integrated circuits configured to control program execution in the solutions of this application.

The communication line 807 may include a path for transmitting information between the foregoing components.

The communication interface 804 is any apparatus such as a transceiver, and is configured to communicate with another apparatus or a communication network, for example, an Ethernet.

The memory 803 may be a read-only memory (read-only memory, ROM) or another type of static storage apparatus that can store static information and instructions, or a random access memory (random access memory, RAM) or another type of dynamic storage apparatus that can store information and instructions. The memory may exist independently, and is connected to the processor through the communication line 807. The memory may alternatively be integrated with the processor.

The memory 803 is configured to store computer-executable instructions for executing the solutions in this application, and the processor 801 controls execution of the computer-executable instructions. The processor 801 is configured to execute computer-executable instructions stored in the memory 803, to implement the intent management method provided in embodiments of this application.

Optionally, the computer-executable instructions in embodiments of this application may also be referred to as application program code. This is not specifically limited in embodiments of this application.

During specific implementation, in an embodiment, the communication apparatus may include a plurality of processors, for example, the processor 801 and a processor 802 in FIG. 8. Each of the processors may be a single-core (single-CPU) processor, or may be a multi-core (multi-CPU) processor. The processor herein may be one or more apparatuses, circuits, and/or processing cores configured to process data (for example, computer program instructions).

During specific implementation, in an embodiment, the communication apparatus may further include an output apparatus 805 and an input apparatus 806. The output apparatus 805 communicates with the processor 801, and may display information in a plurality of manners. The input apparatus 806 communicates with the processor 801, and may receive an input of a user in a plurality of manners. For example, the input apparatus 806 may be a mouse, a touchscreen apparatus, or a sensing apparatus.

When the communication apparatus is a terminal device, the processor 802 in the communication apparatus may include one or more processing units. For example, the processor 802 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the communication apparatus 800. The controller may generate an operation control signal based on an instruction operation code and a time sequence signal, to control instruction reading and instruction execution.

A memory may be further disposed in the processor 802, and is configured to store instructions and data. In some embodiments, the memory in the processor 802 is a cache. The memory may store instructions or data that has been used or cyclically used by the processor 802. If the processor 802 needs to use the instructions or the data again, the processor 802 may directly invoke the instructions or the data from the memory. This avoids repeated access and reduces waiting duration of the processor 802, to improve system efficiency.

In some embodiments, the processor 802 may include one or more interfaces. The interface may include an inter-integrated circuit (inter-integrated circuit, IIC) interface, an inter-integrated circuit sound (inter-integrated circuit sound, IIS) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that, an interface connection relationship between the modules shown in embodiments of this application is merely an example for description, and does not constitute a limitation on the structure of the communication apparatus 800. In some other embodiments of this application, the communication apparatus 800 may alternatively use an interface connection manner different from an interface connection manner in the foregoing embodiment, or a combination of a plurality of interface connection manners.

A wireless communication function of the communication apparatus 800 may be implemented through an antenna 1, an antenna 2, a mobile communication module, a wireless communication module, a modem processor, a baseband processor, and the like.

In some feasible implementations, the communication apparatus 800 may communicate with another device by using a wireless communication function.

The antenna 1 and the antenna 2 are configured to transmit and receive an electromagnetic wave signal. Each antenna in the communication apparatus 800 may be configured to cover one or more communication frequency bands. Different antennas may also be reused to improve antenna utilization. For example, the antenna 1 may be multiplexed as a diversity antenna of a wireless local area network. In some other embodiments, the antenna may be used in combination with a tuning switch.

The mobile communication module may provide a solution that is applied to the communication apparatus 800 and that includes wireless communication such as 1G/3G/4G/5G. The mobile communication module may include at least one filter, a switch, a power amplifier, a low noise amplifier (low noise amplifier, LNA), and the like. The mobile communication module may receive an electromagnetic wave through the antenna 1, perform processing such as filtering or amplification on the received electromagnetic wave, and transmit the electromagnetic wave to the modem processor for demodulation. The mobile communication module may further amplify a signal modulated by the modem processor, and convert the signal into an electromagnetic wave for radiation through the antenna 2. In some embodiments, at least some functional modules of the mobile communication module may be disposed in the processor 802. In some embodiments, at least some functional modules of the mobile communication module may be disposed in a same device as at least some modules of the processor 802.

The modem processor may include a modulator and a demodulator. The modulator is configured to modulate a to-be-sent low-frequency baseband signal into a medium-high-frequency signal. The demodulator is configured to demodulate the received electromagnetic wave signal into a low-frequency baseband signal. Then, the demodulator transmits the demodulated low-frequency baseband signal to the baseband processor for processing. The low-frequency baseband signal is processed by the baseband processor and then transferred to the application processor. The application processor outputs a sound signal by using an audio device (which is not limited to a speaker, a receiver, or the like), or displays an image or a video by using a display. In some embodiments, the modem processor may be an independent device. In some other embodiments, the modem processor may be independent of the processor 802, and is disposed in a same device as the mobile communication module or another functional module.

The communication apparatus 800 implements a display function by using the GPU, the display, the application processor, and the like. The GPU is an image processing microprocessor, and is connected to the display and the application processor. The GPU is configured to perform mathematical and geometric calculations, and is configured for graphics rendering. The processor 802 may include one or more GPUs that execute program instructions to generate or change display information.

The external memory interface may be configured to be connected to an external storage card, for example, a Micro SD card, to extend a storage capability of the communication apparatus 800. The external storage card communicates with the processor 802 through the external memory interface, to implement a data storage function. For example, files such as music and videos are stored in the external storage card.

An internal memory may be configured to store computer-executable program code. The executable program code includes instructions. The processor 802 runs the instructions stored in the internal memory, to perform various function applications of the communication apparatus 800 and data processing. The internal memory may include a program storage area and a data storage area. The program storage area may store an operating system, an application program required by at least one function (for example, a sound playing function or an image playing function), and the like. The data storage area may store data (for example, audio data and a phone book) created during use of the communication apparatus 800, and the like. In addition, the internal memory may include a high-speed random access memory, and may further include a non-volatile memory, for example, at least one magnetic disk storage device, a flash storage device, or a universal flash storage (universal flash storage, UFS).

The foregoing communication apparatus may be a general-purpose apparatus or a dedicated apparatus. During specific implementation, the communication apparatus may be a desktop computer, a portable computer, a network server, a wireless terminal apparatus, an embedded apparatus, or an apparatus having a structure similar to that in FIG. 8. A type of the communication apparatus is not limited in embodiments of this application. The communication apparatus may be a cloud server, or may be a terminal device. This is not limited herein.

It may be understood that, the structure shown in embodiments of this application does not constitute a specific limitation on the communication apparatus 800. In some other embodiments of this application, the communication apparatus 800 may include more or fewer components than those shown in the figure, or combine some components, or split some components, or have different component arrangements. The components shown in the figure may be implemented by using hardware, software, or a combination of software and hardware.

In embodiments of this application, division into functional modules may be performed on the communication apparatus (including a server and a client) based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

The following describes in detail the communication apparatus in this application. FIG. 9 is a diagram of an embodiment of a communication apparatus 900 according to an embodiment of this application.

In a possible implementation, the communication apparatus 900 is used as a first apparatus, and the communication apparatus 900 includes:
a transceiver module 901 and a processing module 902 connected to the transceiver module 901, where
the transceiver module 901 is configured to receive intent management capability information from a second apparatus, where the intent management capability information indicates intent management capability information supported by the second apparatus;
the processing module 902 is configured to generate target intent information based on the intent management capability information and a management requirement, where the target intent information meets a constraint of the intent management capability information, and the target intent information meets the management requirement; and
the transceiver module 901 is further configured to send the target intent information to the second apparatus.

In a possible implementation, the intent management capability information includes one or both of the following:
The intent management capability information includes information about an intent object supported by the second apparatus, or
the intent management capability information includes information about an intent target supported by the second apparatus.

In a possible implementation, the information about the intent object includes one or more of the following:
type information of the intent object, granularity information of the intent object, network standard information of the intent object, or frequency domain information of the intent object; and
the information about the intent target includes one or more of the following:
   type information of the intent target, name information of the intent target, or a value range of the intent target.

In a possible implementation, the intent management capability information further includes:
whether the intent object supports a plurality of frequency domains, or whether the intent object supports a plurality of network standards; and
whether the second apparatus supports a plurality of intent targets or a constraint relationship between a plurality of intent targets supported by the second apparatus.

In a possible implementation, the type information of the intent object includes one or more of the following:
a radio network, a radio service, a core network, a core network service, a network slice, or a communication service;
the granularity information of the intent object includes one or more of the following:
   a public land mobile network PLMN granularity, a 5G quality of service indicator 5QI granularity, a single network slice selection assistance information S-NSSAI granularity, a user equipment UE granularity, a UE group granularity, a tenant granularity, a region granularity, or a raster granularity;
   the network standard information of the intent object includes: a 3G network, a 4G network, or a 5G network; and
   the frequency domain information of the intent object includes: frequency information or frequency band information.

In a possible implementation, the type information of the intent target includes one or more of the following:
a coverage-type target, a capacity-type target, a rate-type target, an energy efficiency-type target, a voice-type target, a latency-type target, or an experience-type target; and
the name information of the intent target includes one or more of the following:
   a weak reference signal received power RSRP ratio target, a low signal to interference plus noise ratio SINR ratio target, a low rate ratio target, a latency target, a high physical resource block PRB load ratio target, an energy consumption target, an energy efficiency target, or a call drop rate target.

In a possible implementation, the intent management capability information further includes a first identifier and a second identifier, where
the first identifier is an identifier of the intent management capability information, and
the second identifier is an identifier of an intent management function object to which the intent management capability information belongs.

In a possible implementation, the transceiver module 901 is further configured to send the target intent information and the second identifier to the second apparatus.

In a possible implementation, the communication apparatus 900 is used as a second apparatus, and the communication apparatus 900 includes:
a transceiver module 901 and a processing module 902 connected to the transceiver module 901, where
the transceiver module 901 is configured to send intent management capability information to a first apparatus, where the intent management capability information indicates intent management capability information supported by the second apparatus;
the transceiver module 901 is further configured to receive target intent information from the first apparatus, where the target intent information meets a constraint of the intent management capability information, and the target intent information meets a management requirement; and
the processing module 902 is configured to process the target intent information.

In a possible implementation, the intent management capability information includes one or both of the following:
The intent management capability information includes information about an intent object supported by the second apparatus, or
the intent management capability information includes information about an intent target supported by the second apparatus.

In a possible implementation, the information about the intent object includes one or more of the following:
type information of the intent object, granularity information of the intent object, network standard information of the intent object, or frequency domain information of the intent object; and
the information about the intent target includes one or more of the following:
   type information of the intent target, name information of the intent target, or a value range of the intent target.

In a possible implementation, the intent management capability information further includes:
whether the intent object supports a plurality of frequency domains, or whether the intent object supports a plurality of network standards; and
whether the second apparatus supports a plurality of intent targets or a constraint relationship between a plurality of intent targets supported by the second apparatus.

In a possible implementation, the type information of the intent object includes one or more of the following:
a radio network, a radio service, a core network, a core network service, a network slice, or a communication service;
the granularity information of the intent object includes one or more of the following:
   a public land mobile network PLMN granularity, a 5G quality of service indicator 5QI granularity, a single network slice selection assistance information S-NSSAI granularity, a user equipment UE granularity, a UE group granularity, a tenant granularity, a region granularity, or a raster granularity;
   the network standard information of the intent object includes: a 3G network, a 4G network, or a 5G network; and
   the frequency domain information of the intent object includes: frequency information or frequency band information.

In a possible implementation, the type information of the intent target includes one or more of the following:
a coverage-type target, a capacity-type target, a rate-type target, an energy efficiency-type target, a voice-type target, a latency-type target, or an experience-type target; and
the name information of the intent target includes one or more of the following:
   a weak reference signal received power RSRP ratio target, a low signal to interference plus noise ratio SINR ratio target, a low rate ratio target, a latency target, a high physical resource block PRB load ratio target, an energy consumption target, an energy efficiency target, or a call drop rate target.

In a possible implementation, the intent management capability information further includes a first identifier and a second identifier, where
the first identifier is an identifier of the intent management capability information, and
the second identifier is an identifier of an intent management function object to which the intent management capability information belongs; and
the second apparatus manages one or more intent management function objects, and each intent management function object includes one or more pieces of intent management capability information.

In a possible implementation, the transceiver module 901 is further configured to receive the target intent information and the second identifier from the first apparatus;
the processing module 902 is further configured to determine, based on the second identifier from the one or more intent management function objects, an intent management function object that executes the target intent information; and
the processing module 902 is further configured to create an intent based on the target intent information in the determined intent management function object that executes the target intent information.

FIG. 10 is a diagram of an embodiment of a communication apparatus 1000 according to an embodiment of this application. The communication apparatus 1000 includes a communication interface 1001 and a processor 1002 connected to the communication interface 1001. The processor is configured to perform any implementation shown in the foregoing method embodiments.

In a possible implementation, the communication apparatus 1000 is used as a first apparatus, and the communication apparatus 1000 includes:
a communication interface 1001 and a processor 1002 connected to the communication interface 1001, where
the communication interface 1001 is configured to receive intent management capability information from a second apparatus, where the intent management capability information indicates intent management capability information supported by the second apparatus;
the processor 1002 is configured to generate target intent information based on the intent management capability information and a management requirement, where the target intent information meets a constraint of the intent management capability information, and the target intent information meets the management requirement; and
the communication interface 1001 is further configured to send the target intent information to the second apparatus.

In a possible implementation, the intent management capability information includes one or both of the following:
The intent management capability information includes information about an intent object supported by the second apparatus, or
the intent management capability information includes information about an intent target supported by the second apparatus.

In a possible implementation, the information about the intent object includes one or more of the following:
type information of the intent object, granularity information of the intent object, network standard information of the intent object, or frequency domain information of the intent object; and
the information about the intent target includes one or more of the following:
   type information of the intent target, name information of the intent target, or a value range of the intent target.

In a possible implementation, the intent management capability information further includes:
whether the intent object supports a plurality of frequency domains, or whether the intent object supports a plurality of network standards; and
whether the second apparatus supports a plurality of intent targets or a constraint relationship between a plurality of intent targets supported by the second apparatus.

In a possible implementation, the type information of the intent object includes one or more of the following:
a radio network, a radio service, a core network, a core network service, a network slice, or a communication service;
the granularity information of the intent object includes one or more of the following:
   a public land mobile network PLMN granularity, a 5G quality of service indicator 5QI granularity, a single network slice selection assistance information S-NSSAI granularity, a user equipment UE granularity, a UE group granularity, a tenant granularity, a region granularity, or a raster granularity;
   the network standard information of the intent object includes: a 3G network, a 4G network, or a 5G network; and
   the frequency domain information of the intent object includes: frequency information or frequency band information.

In a possible implementation, the type information of the intent target includes one or more of the following:
a coverage-type target, a capacity-type target, a rate-type target, an energy efficiency-type target, a voice-type target, a latency-type target, or an experience-type target; and
the name information of the intent target includes one or more of the following:
   a weak reference signal received power RSRP ratio target, a low signal to interference plus noise ratio SINR ratio target, a low rate ratio target, a latency target, a high physical resource block PRB load ratio target, an energy consumption target, an energy efficiency target, or a call drop rate target.

In a possible implementation, the intent management capability information further includes a first identifier and a second identifier, where
the first identifier is an identifier of the intent management capability information, and
the second identifier is an identifier of an intent management function object to which the intent management capability information belongs.

In a possible implementation, the communication interface 1001 is further configured to send the target intent information and the second identifier to the second apparatus.

In a possible implementation, the communication apparatus 1000 is used as a second apparatus, and the communication apparatus 1000 includes:
a communication interface 1001 and a processor 1002 connected to the communication interface 1001, where
the communication interface 1001 is configured to send intent management capability information to a first apparatus, where the intent management capability information indicates intent management capability information supported by the second apparatus;
the communication interface 1001 is further configured to receive target intent information from the first apparatus, where the target intent information meets a constraint of the intent management capability information, and the target intent information meets a management requirement; and
the processor 1002 is configured to process the target intent information.

In a possible implementation, the intent management capability information includes one or both of the following:
The intent management capability information includes information about an intent object supported by the second apparatus, or
the intent management capability information includes information about an intent target supported by the second apparatus.

In a possible implementation, the information about the intent object includes one or more of the following:
type information of the intent object, granularity information of the intent object, network standard information of the intent object, or frequency domain information of the intent object; and
the information about the intent target includes one or more of the following:
   type information of the intent target, name information of the intent target, or a value range of the intent target.

In a possible implementation, the intent management capability information further includes:
whether the intent object supports a plurality of frequency domains, or whether the intent object supports a plurality of network standards; and
whether the second apparatus supports a plurality of intent targets or a constraint relationship between a plurality of intent targets supported by the second apparatus.

In a possible implementation, the type information of the intent object includes one or more of the following:
a radio network, a radio service, a core network, a core network service, a network slice, or a communication service;
the granularity information of the intent object includes one or more of the following:
   a public land mobile network PLMN granularity, a 5G quality of service indicator 5QI granularity, a single network slice selection assistance information S-NSSAI granularity, a user equipment UE granularity, a UE group granularity, a tenant granularity, a region granularity, or a raster granularity;
   the network standard information of the intent object includes: a 3G network, a 4G network, or a 5G network; and
   the frequency domain information of the intent object includes: frequency information or frequency band information.

In a possible implementation, the type information of the intent target includes one or more of the following:
a coverage-type target, a capacity-type target, a rate-type target, an energy efficiency-type target, a voice-type target, a latency-type target, or an experience-type target; and
the name information of the intent target includes one or more of the following:
   a weak reference signal received power RSRP ratio target, a low signal to interference plus noise ratio SINR ratio target, a low rate ratio target, a latency target, a high physical resource block PRB load ratio target, an energy consumption target, an energy efficiency target, or a call drop rate target.

In a possible implementation, the intent management capability information further includes a first identifier and a second identifier, where
the first identifier is an identifier of the intent management capability information, and
the second identifier is an identifier of an intent management function object to which the intent management capability information belongs; and
the second apparatus manages one or more intent management function objects, and each intent management function object includes one or more pieces of intent management capability information.

In a possible implementation, the communication interface 1001 is further configured to receive the target intent information and the second identifier from the first apparatus;
the processor 1002 is further configured to determine, based on the second identifier from the one or more intent management function objects, an intent management function object that executes the target intent information; and
the processor 1002 is further configured to create an intent based on the target intent information in the determined intent management function object that executes the target intent information.

With reference to the foregoing embodiments, FIG. 11 is a diagram of a communication system 1100 according to an embodiment of this application. The communication system 1100 provided in embodiments of this application includes a first apparatus 1101 and a second apparatus 1102. The communication system 1100 performs the method shown in any one of the foregoing method embodiments. Specifically, the communication system 1100 includes:
The second apparatus 1102 sends intent management capability information to the first apparatus 1101, where the intent management capability information indicates intent management capability information supported by the second apparatus 1102;
the first apparatus 1101 generates target intent information based on the intent management capability information and a management requirement, where the target intent information meets a constraint of the intent management capability information, and the target intent information meets the management requirement;
the first apparatus 1101 sends the target intent information to the second apparatus 1102; and
the second apparatus 1102 processes the target intent information.

In a possible implementation, the intent management capability information includes one or both of the following:
The intent management capability information indicates an intent object supported by the second apparatus 1102, or
the intent management capability information indicates an intent target supported by the second apparatus 1102.

In a possible implementation, the information about the intent object includes one or more of the following:
type information of the intent object, granularity information of the intent object, network standard information of the intent object, or frequency domain information of the intent object; and
the information about the intent target includes one or more of the following:
   type information of the intent target, name information of the intent target, or a value range of the intent target.

In a possible implementation, the intent management capability information further includes:
whether the intent object supports a plurality of frequency domains, or whether the intent object supports a plurality of network standards; and
whether the second apparatus supports a plurality of intent targets or a constraint relationship between a plurality of intent targets supported by the second apparatus.

In a possible implementation, the type information of the intent object includes one or more of the following:
a radio network, a radio service, a core network, a core network service, a network slice, or a communication service;
the granularity information of the intent object includes one or more of the following:
   a public land mobile network PLMN granularity, a 5G quality of service indicator 5QI granularity, a single network slice selection assistance information S-NSSAI granularity, a user equipment UE granularity, a UE group granularity, a tenant granularity, a region granularity, or a raster granularity;
   the network standard information of the intent object includes: a 3G network, a 4G network, or a 5G network; and
   the frequency domain information of the intent object includes: frequency information or frequency band information.

In a possible implementation, the type information of the intent target includes one or more of the following:
a coverage-type target, a capacity-type target, a rate-type target, an energy efficiency-type target, a voice-type target, a latency-type target, or an experience-type target; and
the name information of the intent target includes one or more of the following:
   a weak reference signal received power RSRP ratio target, a low signal to interference plus noise ratio SINR ratio target, a low rate ratio target, a latency target, a high physical resource block PRB load ratio target, an energy consumption target, an energy efficiency target, or a call drop rate target.

In a possible implementation, the intent management capability information further includes a first identifier and a second identifier, where
the first identifier is an identifier of the intent management capability information, and
the second identifier is an identifier of an intent management function object to which the intent management capability information belongs; and
the second apparatus 1102 manages one or more intent management function objects, and each intent management function object includes one or more pieces of intent management capability information.

In a possible implementation, that the first apparatus 1101 sends the target intent information to the second apparatus 1102 includes:
The first apparatus 1101 sends the target intent information and the second identifier to the second apparatus 1102; and
that the second apparatus 1102 processes the target intent information includes:
   The second apparatus 1102 determines, based on the second identifier from the one or more intent management function objects, an intent management function object that executes the target intent information; and
   the second apparatus 1102 creates an intent based on the target intent information in the determined intent management function object that executes the target intent information.

Further, the communication system 1100 includes one or more communication apparatuses, and the communication apparatus includes a communication interface and a processor connected to the communication interface, where
the communication apparatus is used in a first apparatus 1101 and a second apparatus 1102;
the first apparatus 1101 is configured to perform the method shown in any one of the foregoing method embodiments; and
the second apparatus 1102 is configured to perform the method shown in any one of the foregoing method embodiments.

It should be noted that, the communication apparatus mentioned in embodiments of this application may be, for example, a network device such as a switch or a router, or may be some components on the network device, for example, a board or a line card on the network device, or may be a functional module on the network device, or may be a chip configured to implement the method in this application. This is not specifically limited in embodiments of this application. When the communication apparatus is a chip, a transceiver module configured to implement the method may be, for example, an interface circuit of the chip, and a processing module may be a processing circuit having a processing function in the chip. The communication apparatuses may be directly connected to each other, for example, but not limited to, by using an Ethernet cable or an optical cable.

In some possible embodiments, the communication apparatus (for example, the second apparatus or the first apparatus) may be implemented as a virtualized device. The virtualization device may be a virtual machine (virtual machine, VM), a virtual router, or a virtual switch that runs a program for sending a packet. The virtualization device is deployed on a hardware device (for example, a physical server). For example, the second apparatus may be implemented based on a general-purpose physical server in combination with a network function virtualization (network function virtualization, NFV) technology.

It should be understood that, the communication apparatuses in the foregoing various product forms respectively have any function of the second apparatus and the first apparatus in the foregoing method embodiments. Details are not described herein again.

Embodiments of this application further provide a communication apparatus. The communication apparatus includes a memory and a processor connected to the memory. The processor is configured to execute instructions stored in the memory, to enable the communication apparatus to perform any implementation shown in the foregoing method embodiments.

In a possible implementation, the communication apparatus is used in a second apparatus, to enable the communication apparatus to perform the method in the embodiment shown in FIG. 3.

In another possible implementation, the communication apparatus is used in a first apparatus, to enable the communication apparatus to perform the method in the embodiment shown in FIG. 3.

**In** another possible implementation, the communication apparatus is used in a first device, to enable the communication apparatus to perform the method in the embodiment shown in FIG. 3.

Embodiments of this application further provide a communication system. The communication system includes the first apparatus and the second apparatus in the foregoing embodiments. The communication system is configured to perform any implementation shown in the foregoing method embodiments.

Embodiments of this application further provide a communication system. The communication system includes the first apparatus and the second apparatus in the foregoing embodiments. The communication system is configured to perform any implementation shown in the foregoing method embodiments.

Embodiments of this application further provide a computer program product. The computer program product includes computer program code. When the computer program code is run on a computer, the computer is enabled to perform any implementation shown in the foregoing method embodiments.

Embodiments of this application further provide a chip system, including a memory and a processor. The memory is configured to store a computer program, and the processor is configured to invoke the computer program from the memory and run the computer program, to enable the chip to perform any implementation shown in the foregoing method embodiments.

Embodiments of this application further provide a chip system, including a processor. The processor is configured to invoke and run a computer program, to enable a chip to perform any implementation shown in the foregoing method embodiments.

In addition, it should be noted that the described apparatus embodiment is merely an example. The units described as separate parts may or may not be physically separate, and parts displayed as units may or may not be physical units, in other words, may be located in one position, or may be distributed on a plurality of network units. Some or all of the modules may be selected based on actual requirements to achieve the objectives of the solutions of embodiments. **In** addition, in the accompanying drawings of the apparatus embodiments provided by this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc, and includes several instructions for instructing a computer device to perform the methods in embodiments of this application.

All or some of the foregoing embodiments may be implemented by using software, hardware, firmware, or any combination thereof. When software is used to implement embodiments, all or a part of embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, network apparatus, computing device, or data center to another website, computer, network apparatus, computing device, or data center in a wireline (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a network apparatus or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

It should be understood that "an embodiment" or "some embodiments" mentioned in the entire specification means that particular features, structures, or characteristics related to the embodiment are included in one or more embodiments of this application. Therefore, "in one embodiment" or "in an embodiment" that appears throughout the whole specification does not necessarily mean a same embodiment. In addition, these particular features, structures, or characteristics may be combined in one or more embodiments in any proper manner. It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, the units and steps in the examples described with reference to embodiments disclosed herein may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

**In** the several embodiments provided in this application, it should be understood that the disclosed system, apparatus, and method may be implemented in other manners. For example, the described apparatus embodiments are merely examples. For example, division into the units is merely logical function division and may be another division manner during actual implementation. For example, a plurality of units or components may be combined or integrated into another system, or some features may be ignored, or not performed. In addition, the displayed or discussed mutual couplings or direct couplings or communication connections may be implemented through some interfaces. The indirect couplings or communication connections between the apparatuses or units may be implemented in an electrical, a mechanical, or another form.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit. The integrated unit may be implemented in a form of hardware, or may be implemented in a form of a software function unit.

When the integrated unit is implemented in the form of the software function unit and sold or used as an independent product, the integrated unit may be stored in a computer-readable storage medium. Based on such an understanding, the technical solutions of this application essentially, or the part that makes contribution, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. "And/or" describes an association relationship between associated objects, and represents that three relationships may exist. For example, A and/or B may represent the following cases: A exists alone, both A and B exist, and B exists alone, where A and B may be singular or plural. In the text descriptions of this application, the character "/" indicates an "or" relationship between the associated objects. In a formula in this application, the character "/" indicates a "division" relationship between the associated objects. "Including at least one of A, B, and C" may indicate: including A; including B; including C; including A and B; including A and C; including B and C; and including A, B, and C.

It may be understood that, various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. An intent management method, comprising:
receiving, by a first apparatus, intent management capability information from a second apparatus, wherein the intent management capability information indicates intent management capability information supported by the second apparatus;
generating, by the first apparatus, target intent information based on the intent management capability information and a management requirement, wherein the target intent information meets a constraint of the intent management capability information, and the target intent information meets the management requirement; and
sending, by the first apparatus, the target intent information to the second apparatus.

2. The method according to claim **1,** wherein the intent management capability information comprises one or both of the following:
the intent management capability information comprises information about an intent object supported by the second apparatus, or
the intent management capability information comprises information about an intent target supported by the second apparatus.

3. The method according to claim 2, wherein
the information about the intent object comprises one or more of the following:
type information of the intent object, granularity information of the intent object, network standard information of the intent object, or frequency domain information of the intent object; and
the information about the intent target comprises one or more of the following:
type information of the intent target, name information of the intent target, or a value range of the intent target.

4. The method according to claim 2 or 3, wherein the intent management capability information further comprises:
whether the intent object supports a plurality of frequency domains, or whether the intent object supports a plurality of network standards; and
whether the second apparatus supports a plurality of intent targets or a constraint relationship between a plurality of intent targets supported by the second apparatus.

5. The method according to claim 3 or 4, wherein
the type information of the intent object comprises one or more of the following:
a radio network, a radio service, a core network, a core network service, a network slice, or a communication service;
the granularity information of the intent object comprises one or more of the following:
a public land mobile network PLMN granularity, a 5G quality of service indicator 5QI granularity, a single network slice selection assistance information S-NSSAI granularity, a user equipment UE granularity, a UE group granularity, a tenant granularity, a region granularity, or a raster granularity;
the network standard information of the intent object comprises: a 3G network, a 4G network, or a 5G network; and
the frequency domain information of the intent object comprises: frequency information or frequency band information.

6. The method according to any one of claims 3 to 5, wherein
the type information of the intent target comprises one or more of the following:
a coverage-type target, a capacity-type target, a rate-type target, an energy efficiency-type target, a voice-type target, a latency-type target, or an experience-type target; and
the name information of the intent target comprises one or more of the following:
a weak reference signal received power RSRP ratio target, a low signal to interference plus noise ratio SINR ratio target, a low rate ratio target, a latency target, a high physical resource block PRB load ratio target, an energy consumption target, an energy efficiency target, or a call drop rate target.

7. The method according to any one of claims 1 to 6, wherein
the intent management capability information further comprises a first identifier and a second identifier, wherein
the first identifier is an identifier of the intent management capability information, and
the second identifier is an identifier of an intent management function object to which the intent management capability information belongs.

8. The method according to claim 7, wherein the sending, by the first apparatus, the target intent information to the second apparatus comprises:
sending, by the first apparatus, the target intent information and the second identifier to the second apparatus.

9. An intent management method, comprising:
sending, by a second apparatus, intent management capability information to a first apparatus, wherein the intent management capability information indicates intent management capability information supported by the second apparatus;
receiving, by the second apparatus, target intent information from the first apparatus, wherein the target intent information meets a constraint of the intent management capability information, and the target intent information meets a management requirement; and
processing, by the second apparatus, the target intent information.

10. The method according to claim 9, wherein the intent management capability information comprises one or both of the following:
the intent management capability information comprises information about an intent object supported by the second apparatus, or
the intent management capability information comprises information about an intent target supported by the second apparatus.

11. The method according to claim 10, wherein
the information about the intent object comprises one or more of the following:
type information of the intent object, granularity information of the intent object, network standard information of the intent object, or frequency domain information of the intent object; and
the information about the intent target comprises one or more of the following:
type information of the intent target, name information of the intent target, or a value range of the intent target.

12. The method according to claim 9 or 10, wherein the intent management capability information further comprises:
whether the intent object supports a plurality of frequency domains, or whether the intent object supports a plurality of network standards; and
whether the second apparatus supports a plurality of intent targets or a constraint relationship between a plurality of intent targets supported by the second apparatus.

13. The method according to claim 11 or 12, wherein
the type information of the intent object comprises one or more of the following:
a radio network, a radio service, a core network, a core network service, a network slice, or a communication service;
the granularity information of the intent object comprises one or more of the following:
a public land mobile network PLMN granularity, a 5G quality of service indicator 5QI granularity, a single network slice selection assistance information S-NSSAI granularity, a user equipment UE granularity, a UE group granularity, a tenant granularity, a region granularity, or a raster granularity;
the network standard information of the intent object comprises: a 3G network, a 4G network, or a 5G network; and
the frequency domain information of the intent object comprises: frequency information or frequency band information.

14. The method according to any one of claims 11 to 13, wherein
the type information of the intent target comprises one or more of the following:
a coverage-type target, a capacity-type target, a rate-type target, an energy efficiency-type target, a voice-type target, a latency-type target, or an experience-type target; and
the name information of the intent target comprises one or more of the following:
a weak reference signal received power RSRP ratio target, a low signal to interference plus noise ratio SINR ratio target, a low rate ratio target, a latency target, a high physical resource block PRB load ratio target, an energy consumption target, an energy efficiency target, or a call drop rate target.

15. The method according to any one of claims 9 to 14, wherein the intent management capability information further comprises: a first identifier and a second identifier, wherein
the first identifier is an identifier of the intent management capability information, and
the second identifier is an identifier of an intent management function object to which the intent management capability information belongs; and
the second apparatus manages one or more intent management function objects, and each intent management function object comprises one or more pieces of intent management capability information.

16. The method according to claim 15, wherein the receiving, by the second apparatus, target intent information from the first apparatus comprises:
receiving, by the second apparatus, the target intent information and the second identifier from the first apparatus; and
the processing, by the second apparatus, the target intent information comprises:
determining, by the second apparatus based on the second identifier from the one or more intent management function objects, an intent management function object that executes the target intent information; and
creating, by the second apparatus based on the target intent information, an intent in the determined intent management function object that executes the target intent information.

17. An intent management method, wherein the method is applied to a communication system, the communication system comprises: a first apparatus and a second apparatus, and the method comprises:
sending, by the second apparatus, intent management capability information to the first apparatus, wherein the intent management capability information indicates intent management capability information supported by the second apparatus;
generating, by the first apparatus, target intent information based on the intent management capability information and a management requirement, wherein the target intent information meets a constraint of the intent management capability information, and the target intent information meets the management requirement;
sending, by the first apparatus, the target intent information to the second apparatus; and
processing, by the second apparatus, the target intent information.

18. The method according to claim 17, wherein the intent management capability information comprises one or both of the following:
the intent management capability information comprises information about an intent object supported by the second apparatus, or
the intent management capability information comprises information about an intent target supported by the second apparatus.

19. The method according to claim 18, wherein
the information about the intent object comprises one or more of the following:
type information of the intent object, granularity information of the intent object, network standard information of the intent object, or frequency domain information of the intent object; and
the information about the intent target comprises one or more of the following:
type information of the intent target, name information of the intent target, or a value range of the intent target.

20. The method according to claim 18 or 19, wherein the intent management capability information further comprises:
whether the intent object supports a plurality of frequency domains, or whether the intent object supports a plurality of network standards; and
whether the second apparatus supports a plurality of intent targets or a constraint relationship between a plurality of intent targets supported by the second apparatus.

21. The method according to claim 19 or 20, wherein
the type information of the intent object comprises one or more of the following:
a radio network, a radio service, a core network, a core network service, a network slice, or a communication service;
the granularity information of the intent object comprises one or more of the following:
a public land mobile network PLMN granularity, a 5G quality of service indicator 5QI granularity, a single network slice selection assistance information S-NSSAI granularity, a user equipment UE granularity, a UE group granularity, a tenant granularity, a region granularity, or a raster granularity;
the network standard information of the intent object comprises: a 3G network, a 4G network, or a 5G network; and
the frequency domain information of the intent object comprises: frequency information or frequency band information.

22. The method according to any one of claims 19 to 21, wherein
the type information of the intent target comprises one or more of the following:
a coverage-type target, a capacity-type target, a rate-type target, an energy efficiency-type target, a voice-type target, a latency-type target, or an experience-type target; and
the name information of the intent target comprises one or more of the following:
a weak reference signal received power RSRP ratio target, a low signal to interference plus noise ratio SINR ratio target, a low rate ratio target, a latency target, a high physical resource block PRB load ratio target, an energy consumption target, an energy efficiency target, or a call drop rate target.

23. The method according to any one of claims 17 to 22, wherein the intent management capability information further comprises: a first identifier and a second identifier, wherein
the first identifier is an identifier of the intent management capability information, and
the second identifier is an identifier of an intent management function object to which the intent management capability information belongs; and
the second apparatus manages one or more intent management function objects, and each intent management function object comprises one or more pieces of intent management capability information.

24. The method according to claim 23, wherein
the sending, by the first apparatus, the target intent information to the second apparatus comprises:
sending, by the first apparatus, the target intent information and the second identifier to the second apparatus; and
the processing, by the second apparatus, the target intent information comprises:
determining, by the second apparatus based on the second identifier from the one or more intent management function objects, an intent management function object that executes the target intent information; and
creating, by the second apparatus based on the target intent information, an intent in the determined intent management function object that executes the target intent information.

25. A communication apparatus, wherein the communication apparatus is used in a first apparatus, and the communication apparatus comprises:
a communication interface and a processor connected to the communication interface, wherein
the communication interface is configured to receive intent management capability information from a second apparatus, wherein the intent management capability information indicates intent management capability information supported by the second apparatus;
the processor is configured to generate target intent information based on the intent management capability information and a management requirement, wherein the target intent information meets a constraint of the intent management capability information, and the target intent information meets the management requirement; and
the communication interface is further configured to send the target intent information to the second apparatus.

26. The communication apparatus according to claim 25, wherein the intent management capability information comprises one or both of the following:
the intent management capability information comprises information about an intent object supported by the second apparatus, or
the intent management capability information comprises information about an intent target supported by the second apparatus.

27. The communication apparatus according to claim 26, wherein
the information about the intent object comprises one or more of the following:
type information of the intent object, granularity information of the intent object, network standard information of the intent object, or frequency domain information of the intent object; and
the information about the intent target comprises one or more of the following:
type information of the intent target, name information of the intent target, or a value range of the intent target.

28. The communication apparatus according to claim 26 or 27, wherein the intent management capability information further comprises:
whether the intent object supports a plurality of frequency domains, or whether the intent object supports a plurality of network standards; and
whether the second apparatus supports a plurality of intent targets or a constraint relationship between a plurality of intent targets supported by the second apparatus.

29. The communication apparatus according to claim 27 or 28, wherein
the type information of the intent object comprises one or more of the following:
a radio network, a radio service, a core network, a core network service, a network slice, or a communication service;
the granularity information of the intent object comprises one or more of the following:
a public land mobile network PLMN granularity, a 5G quality of service indicator 5QI granularity, a single network slice selection assistance information S-NSSAI granularity, a user equipment UE granularity, a UE group granularity, a tenant granularity, a region granularity, or a raster granularity;
the network standard information of the intent object comprises: a 3G network, a 4G network, or a 5G network; and
the frequency domain information of the intent object comprises: frequency information or frequency band information.

30. The communication apparatus according to any one of claims 27 to 29, wherein
the type information of the intent target comprises one or more of the following:
a coverage-type target, a capacity-type target, a rate-type target, an energy efficiency-type target, a voice-type target, a latency-type target, or an experience-type target; and
the name information of the intent target comprises one or more of the following:
a weak reference signal received power RSRP ratio target, a low signal to interference plus noise ratio SINR ratio target, a low rate ratio target, a latency target, a high physical resource block PRB load ratio target, an energy consumption target, an energy efficiency target, or a call drop rate target.

31. The communication apparatus according to any one of claims 25 to 30, wherein
the intent management capability information further comprises a first identifier and a second identifier, wherein
the first identifier is an identifier of the intent management capability information, and
the second identifier is an identifier of an intent management function object to which the intent management capability information belongs.

32. The communication apparatus according to claim 31, wherein
the communication interface is further configured to send the target intent information and the second identifier to the second apparatus.

33. A communication apparatus, wherein the communication apparatus is used in a second apparatus, and the communication apparatus comprises:
a communication interface and a processor connected to the communication interface, wherein
the communication interface is configured to send intent management capability information to a first apparatus, wherein the intent management capability information indicates intent management capability information supported by the second apparatus;
the communication interface is further configured to receive target intent information from the first apparatus, wherein the target intent information meets a constraint of the intent management capability information, and the target intent information meets a management requirement; and
the processor is configured to process the target intent information.

34. The communication apparatus according to claim 33, wherein the intent management capability information comprises one or both of the following:
the intent management capability information comprises information about an intent object supported by the second apparatus, or
the intent management capability information comprises information about an intent target supported by the second apparatus.

35. The communication apparatus according to claim 34, wherein
the information about the intent object comprises one or more of the following:
type information of the intent object, granularity information of the intent object, network standard information of the intent object, or frequency domain information of the intent object; and
the information about the intent target comprises one or more of the following:
type information of the intent target, name information of the intent target, or a value range of the intent target.

36. The communication apparatus according to claim 34 or 35, wherein the intent management capability information further comprises:
whether the intent object supports a plurality of frequency domains, or whether the intent object supports a plurality of network standards; and
whether the second apparatus supports a plurality of intent targets or a constraint relationship between a plurality of intent targets supported by the second apparatus.

37. The communication apparatus according to claim 35 or 36, wherein
the type information of the intent object comprises one or more of the following:
a radio network, a radio service, a core network, a core network service, a network slice, or a communication service;
the granularity information of the intent object comprises one or more of the following:
a public land mobile network PLMN granularity, a 5G quality of service indicator 5QI granularity, a single network slice selection assistance information S-NSSAI granularity, a user equipment UE granularity, a UE group granularity, a tenant granularity, a region granularity, or a raster granularity;
the network standard information of the intent object comprises: a 3G network, a 4G network, or a 5G network; and
the frequency domain information of the intent object comprises: frequency information or frequency band information.

38. The communication apparatus according to any one of claims 35 to 37, wherein
the type information of the intent target comprises one or more of the following:
a coverage-type target, a capacity-type target, a rate-type target, an energy efficiency-type target, a voice-type target, a latency-type target, or an experience-type target; and
the name information of the intent target comprises one or more of the following:
a weak reference signal received power RSRP ratio target, a low signal to interference plus noise ratio SINR ratio target, a low rate ratio target, a latency target, a high physical resource block PRB load ratio target, an energy consumption target, an energy efficiency target, or a call drop rate target.

39. The communication apparatus according to any one of claims 33 to 38, wherein the intent management capability information further comprises: a first identifier and a second identifier, wherein
the first identifier is an identifier of the intent management capability information, and
the second identifier is an identifier of an intent management function object to which the intent management capability information belongs; and
the second apparatus manages one or more intent management function objects, and each intent management function object comprises one or more pieces of intent management capability information.

40. The communication apparatus according to claim 39, wherein
the communication interface is further configured to receive the target intent information and the second identifier from the first apparatus;
the processor is further configured to determine, based on the second identifier from the one or more intent management function objects, an intent management function object that executes the target intent information; and
the processor is further configured to create, based on the target intent information, an intent in the determined intent management function object that executes the target intent information.

41. A communication system, wherein the communication system comprises one or more communication apparatuses, and the communication apparatus comprises a communication interface and a processor connected to the communication interface, wherein
the communication apparatus is used in a first apparatus and a second apparatus;
the first apparatus is configured to perform the method according to any one of claims 1 to 8; and
the second apparatus is configured to perform the method according to any one of claims 9 to 16.

42. A computer-readable storage medium, comprising a program, wherein when the program is executed by a processing unit, the method according to any one of claims 1 to 8, claims 9 to 16, or claims 17 to 24 is performed.

43. A computer program product, comprising a computer program/instructions, wherein when the computer program/instructions is/are executed by a processor, steps of the method according to any one of claims 1 to 8, claims 9 to 16, or claims 17 to 24 are implemented.

44. A chip, wherein the chip comprises a processing unit and a communication interface, the processing unit obtains program instructions through the communication interface, the program instructions are executed by the processing unit, and the processing unit is configured to perform steps of the method according to any one of claims 1 to 8, claims 9 to 16, or claims 17 to 24.
